# EUROPÄISCHE PATENTSCHRIFT

(11) **EP 0 563 118 B1**
(45) Veröffentlichungstag und Bekanntmachung des Hinweises auf die Patenterteilung: **20.03.1996**
(21) Anmeldenummer: 92901050.2
(22) Anmeldetag: 18.12.1991
(51) Int. Cl.: G21C 9/016, G21C 15/18

(54) **KERNRÜCKHALTEVORRICHTUNG FÜR KERNREAKTORANLAGE UND NOTKÜHLUNG BEI KERNSCHMELZE**
CORE CONTAINMENT DEVICE IN NUCLEAR REACTOR INSTALLATION AND EMERGENCY COOLING ON CORE MELT-THROUGH
DISPOSITIF DE CONFINEMENT D'UNE INSTALLATION POUR REACTEURS NUCLEAIRES ET PROCEDE DE REFROIDISSEMENT DE SECOURS EN CAS DE FUSION DU COEUR

(30) Priorität: 21.12.1990 DE 4041295
(43) Veröffentlichungstag der Anmeldung: 06.10.1993
(73) Patentinhaber: SIEMENS AKTIENGESELLSCHAFT, D-80333 München (DE)
(72) Erfinder: ARTNIK, Josef, D-8521 Bräuningshof (DE); BITTERMANN, Dietmar, D-8500 Nürnberg (DE); EYINK, Jürgen, D-8520 Erlangen (DE); FISCHER, Ulrich, D-8521 Hannberg (DE); GÖBEL, Andreas, D-8521 Spardorf (DE); HELLMANN, Sieghard, D-8520 Erlangen (DE); KÖHLER, Wolfgang, D-8501 Kalchreuth (DE); KORN, Walter, D-8522 Niederndorf (DE); PLANK, Hermann, D-8555 Adelsdorf (DE); SCHOLZ, Manfred, D-8520 Erlangen (DE); WEISSHÄUPL, Horst, D-8522 Herzogenaurach (DE)
(86) Internationale Anmeldenummer: DE9100993
(87) Internationale Veröffentlichungsnummer: WO9211642

(56) Entgegenhaltungen:
- EP-A- 393 805
- DE-A- 2 035 089
- DE-A- 3 520 772
- GB-A- 2 236 210
- US-A- 4 342 621
- US-A- 4 442 065
- Patent Abstracts of Japan, Vol. 13, no. 118 (M-806)(3466) 23. March 1989, & JP, A, 63294494
- Patent Abstracts of Japan, Vol. 1, no. 13, (M-77)[4423] 27. October 1977, & JP, 52070294
- Patent Abstracts of Japan,vol. 9, no. 85 (E-308)(1808)13 April 1985, & JP-A-59215755

## Beschreibung

Die Erfindung bezieht sich auf eine Kernreaktor-Anlage, insbesondere für Leichtwasserreaktoren, mit einem Reaktordruckbehälter mit Reaktorkern und einer Kernrückhaltevorrichtung gemäß Oberbegriff des Anspruchs 1.

Eine solche Kernreaktor-Anlage ist bekannt durch die US-A-3 607 630. Diese bekannte Kernreaktor-Anlage weist darüber hinaus die folgende Merkmale auf: Eine Trag- und Schutzstruktur begrenzt mit einem Bodenbereich und einer Umfangswand eine Reaktorkaverne, und der mit vertikalem und lateralem Abstand zu Bodenbereich bzw. Umfangswand in der Reaktorkaverne angeordnete Reaktordruckbehälter ist an der Trag- und Schutzstruktur gelagert. Die Kernrückhaltevorrichtung weist dabei einen mittels einer Kühlflüssigkeit kühlbaren Auffangbehälter für die Kernschmelze auf, welcher innerhalb der Reaktorkaverne und unterhalb des Reaktordruckbehälters in den Bodenbereich der Trag- und Schutzstruktur eingelassen ist. Der Auffangbehälter, auch als "Core Catcher" bezeichnet, ist flach, pfannenförmig und intern wassergekühlt. Er ist über eine Falleitung an einen auf höherem Niveau angeordneten Flutbehälter angeschlossen. Der sich im hypothetischen Kernschmelzfall, wenn sich also die Kernschmelze im Auffangbehälter verteilt, bildende Naßdampf wird über Auslaßleitungen ins Containment oder in Kondensationseinrichtungen (Dampfabscheider) abgeblasen. Das kondensierte Kühlwasser wird zum Flutbehälter zurückgeführt. Der Auffangbehälter besteht aus einer Vielzahl von parallelen Rohren, die einlaß- und auslaßseitig an je ein gemeinsamens Verteil- bzw. Sammelrohr angeschlossen sind. Die relativ guten Kühleigenschaften dieses bekannten Auffangbehälters können indessen, insbesondere bei Kernreaktoren größerer Leistung, beeinträchtigt werden, wenn aufgrund von größeren herabfallenden Massen die Rohrstruktur des Auffangbehälters verformt und dadurch Kühlquerschnitte verringert oder blockiert werden.

Der Core-Catcher nach einem weiteren - nicht vorveröffentlichten - Dokument, der GB-A-2 236 210, weist einen Auffangbehälter in "multilayer sandwich construction" auf, mit einem tragenden, nach unten ausgewölbten Stahltopf, einer Auskleidung mit ineinander verzahnten Zirkonsteinen und einer die Auskleidung nach oben abdeckenden Stahlhaut, welche im Falle auftreffender Kernschmelze durchschmilzt, also geopfert wird. Da das Auffangvolumen des Core-Catchers relativ klein und - alternativ zu einer Gaskühlung - lediglich mit stehender Wassersäule in der Schildgrube oder Reaktorkaverne eine Wasserkühlung vorgesehen ist, so wäre eine wirksame Dauerkühlung der Kernschmelze (die im Anfangsstadium Temperaturen oberhalb von 2000° C aufweisen kann) nur bei kleineren Reaktorleistungen möglich, weil sonst Filmsieden am äußeren Stahlmantel des Core-Catchers auftreten kann, mit der Gefahr eines wesentlich verschlechterten Wärmeübergangs.

Demgegenüber soll durch die Erfindung eine Kernreaktor-Anlage der eingangs genannten Art angegeben werden, durch deren Auffangbehälter-Ausbildung und -Abstützung auch bei größeren Reaktorleistungen und Reaktorkerngewichten ausreichende Kühlkanalquerschnitte und eine Kühlung einer eventuellen Kernschmelze gewährleistet werden können, ohne daß eine Beeinträchtigung der die Kühlkanäle definierenden Struktur durch die Verformungskräfte auftreffender Massen zu befürchten wäre.

Weiter sollen bei der Kernreaktor-Anlage nach der Erfindung im Rahmen von Unteraufgaben die Voraussetzungen gegeben sein, den Auffangbehälter nach dem Naturumlaufprinzip mit einer Flüssigkeit kühlen zu können; außerdem ein duales Kühlsystem (Luftkühlung und Wasserkühlung) so zu verwirklichen, daß im Notkühlfall die Luftkühlung zumindest partiell durch die Wasserkühlung ohne besondere Umschaltbefehle abgelöst wird. Eine andere Unteraufgabe besteht darin, die - bei vorhandener Kernschmelze - vom Grunde des Auffangbehälters ausgehende radioaktive Strahlung von den oberhalb des Auffangbehälters befindlichen Wandteilen der Trag- und Schutzstruktur wirksam fernzuhalten; eine weitere Unteraufgabe besteht darin, eine den Reaktordruckbehälter umgebende Wärmedämmung in das System aus Auffangbehälter und dualer Kühlung zu integrieren.

Es fehlte bisher nicht an Vorschlägen, durch besondere Sicherheitsvorkehrungen den Störfall einer Kernschmelze auszuschliessen. Die in neuerer Zeit entwickelte Sicherheitsphilosophie geht jedoch davon aus, daß es sicherheitstechnisch besser ist, einen Kernschmelz-Störfall - und mag die Wahrscheinlichkeit seines Eintretens auch noch so gering sein - in die Überlegungen einzubeziehen. Hiervon geht die Erfindung aus. Mit ihr soll eine besonders wirksame Schutzbarriere zur Verhinderung unerwünschter Folgen eines theoretisch angenommenen Kernschmelz-Störfall geschaffen werden.

Weitere Unteraufgaben, die mit der vorstehend definierten allgemeinen Aufgabe im Zusammenhang stehen, ergeben sich aus den nachfolgenden Überlegungen. Bei Leichtwasserkernkraftwerken im allgemeinen und bei Druckwasserkernreaktoren im besonderen ist es erwünscht, daß bei allen angenommenen Störfällen die Integrität des Containments erhalten bleibt, also auch im Kernschmelzfall, sei es, daß es sich um eine beginnende, partielle Kernschmelze oder um ein vollständiges Durchschmelzen des Kerns handelt. Zur Beherrschung eines solchen Störfalls werden insbesondere die folgenden Forderungen aufgestellt:
a) Es dürfen keine Spaltprodukte in größerem Ausmaß aus der Kernschmelze in das Containment entweichen; diese muß vielmehr durch laufend gekühltes Wasser (oder ein anderes geeignetes flüssiges Kühlmittel) abgedeckt bleiben bzw. durch Kühlung verkrustet werden, um einen Rückhalteeffekt zu erzielen.
b) Die Kernschmelze darf nicht, zumindest nicht während der ersten Tage des auslegungsüberschreitenden Ereignisses, mit dem Beton der Sicherheitsbehälter-Tragstruktur in Wechselwirkung treten. Dies auch deshalb, weil andernfalls Wasserstoff, Wasserdampf, nicht kondensierbare Gase und andere Reaktionsprodukte freigesetzt werden könnten.
c) Es muß eine Langzeitkühlung der Kernschmelze sichergestellt sein, durch welche die Nachzerfallswärme an eine Wärmesenke abgeführt und langfristig die Schmelze zur Erstarrung gebracht und im festen Aggregatzustand gehalten werden kann.
d) Dampfexplosionen größeren Ausmaßes, die dadurch entstehen könnten, daß größere Kernschmelzmassen in ein Wasserbad fallen oder "plumpsen", sind zu verhindern.

Gegenstand der Erfindung ist eine Kernreaktor-Anlage, insbesondere eine Leichtwasserreaktor-Anlage, mit einem Reaktordruckbehälter mit Reaktorkern und einer Kernrückhaltevorrichtung, welche zur Lösung der gestellten Aufgabe durch die folgenden Merkmale gekennzeichnet ist:
a) unterhalb des Reaktordruckbehälters ist ein mittels einer Kühlflüssigkeit kühlbarer Auffangbehälter für die Kernschmelze so installiert, daß seine Bodenwand und seine Mantelwand einen Abstandszwischenraum zum Bodenbereich bzw. zur Umfangswand einer den Reaktordruckbehälter tragenden sowie unten und seitlich umgebenden Trag- und Schutzstruktur aufweisen,
b) im Abstandszwischenraum sind bodenseitige und mantelseitige Kühlkanäle zur Außenkühlung des Auffangbehälters mit einer Kühlflüssigkeit sowie - im Flächenbereich der Bodenwand - Turbulenzkörper zur Erzeugung einer von innen nach außen über die Bodenwand zur Mantelwand fließenden Turbulenzströmung der Kühlflüssigkeit angeordnet.

Vorteilhafte Weiterbildungen des Gegenstandes des Patentanspruchs 1 sind in den Unteransprüchen 2 bis 21 angegeben.

Der Auffangbehälter weist vorzugsweise eine solche Höhe auf (mindestens ca. 3 m), daß die Mindesthöhe zur Ausbildung einer Naturumlaufströmung bei flüssigkeitsgefüllten boden- und mantelseitigen Kühlkanälen (äußerem Kühlsystem) gegeben ist. Der Auffangbehälter schützt nicht nur mit seiner Bodenwand, sondern auch mit seiner hochgezogenen Mantelwand den Beton der Trag- und Schutzstruktur (biologischer Schild) gegen Wärme- und Strahlungseinwirkung, die vom Reaktordruckbehälter oder einer Kernschmelze ausgeht. Dabei wird die Reaktorkaverne in ihrer lichten Weite (Innendurchmesser) und in ihrer Tiefe zweckmäßigerweise so groß bemessen, daß auch bei ausreichend großem Abstandszwischenraum (= Spaltweite des äußeren Kühlsystems) der Auffangbehälter ein Volumen umgibt, welches es gestattet, den Grundkörper des Auffangbehälters, vorzugsweise einen Tiegel aus einer temperaturbeständigen Stahllegierung, auf seiner Innenseite mit einer Schutzschicht und einem Mauerwerk aus Abschirmbetonsteinen auszukleiden, und dabei trotzdem ein ausreichendes Aufnahmevolumen für den eventuellen Kernschmelzfall bereitzustellen. Der tiegelartige Grundkörper und die Abstützung durch die Turbulenzkörper an seiner Unterseite - wobei die Turbulenzkörper als turbulenzerzeugende Strömungsleitkörper ausgebildet sind - können unschwer so robust und mit einer über die Grundfläche verteilten Tragfähigkeit ausgestaltet werden, daß ausreichend große Kühlquerschnitte, auch unter starker dynamischer und statischer Belastung, aufrechterhalten werden können. Die Außenkühlung des Auffangbehälters kann aufgrund der großen Durchflußquerschnitte im äußeren Kühlsystem, der anfachbaren Naturumlaufströmung mit entsprechendem Kühlmitteldurchsatz und der erzeugten Turbulenzströmung so wirksam gestaltet werden, daß auch bei der größten thermischen Belastung ein Filmsieden an den äußeren Kühlflächen des Auffangbehälters vermieden ist.

Bevorzugt sind die bodenseitigen Kühlkanäle über eine Einlaßkanalanordnung und die mantelseitigen Kühlkanäle über eine Auslaßkanalanordnung an ein außerhalb der Trag- und Schutzstruktur vorgesehenes, einen Reaktorgebäudesumpf bildendes oder mit diesem verbundenes Kühlwasserreservoir mit einer solchen Steighöhe angeschlossen, daß bei heißem Auffangbehälter und wassergefüllten Kühlkanälen eine Naturumlaufströmung durch die Kühlkanäle hindurch angefacht wird. Der Auffangbehälter kann an der Trag- und Schutzstruktur hängend gelagert sein. Zu diesem Zweck kann er ähnlich einem innerhalb eines Reaktordruckbehälters hängend gelagerten Kernbehälter mit einem Tragflansch versehen sein, mit dem er an entsprechenden Tragflächen der Trag- und Schutzstruktur aufgelagert ist. Bevorzugt wird der Auffangbehälter jedoch an den Bodenteilen der Trag- und Schutzstruktur mittels der Turbulenzkörper (dann auch Abstützkörper) aufgelagert, weil sich dadurch eine Doppelfunktion (Abstützung und Turbulenzerzeugung) erreichen läßt. Zur Ermöglichung einer unbehinderten Wärmedehnung in radialer Richtung kann die Bodenwand des Auffangbehälters an diesen Abstützkörpern oder können letztere am Bodenbereich der Trag- und Schutzstruktur gleitend und/oder federnd gelagert sein. Als besonders günstig hat es sich erwiesen, den Auffangbehälter tiegelartig auszubilden und hierzu seine Bodenwand nach unten bzw. außen auszuwölben, wobei seine Bodenwand über einen abgerundeten Kantenbereich in die Mantelwand übergeht und die Mantelwand bevorzugt vom abgerundeten Kantenbereich bis zum oberen Rand des Auffangbehälters schwach konisch verjüngt ist. Für die Bodenwand des Auffangbehälters ist es zweckmäßig, wenn sich diese von einem tiefsten Zentralbereich bis zum Kantenbereich in Form eines flachen Kegelmantels erweitert, dessen in axial-radialen Schnittebenen liegende Schnittflächen mit einem kleinen Steigungswinkel zur Horizontalen verlaufen. Diese schwache Steigung wie auch die Abrundung im Kantenbereich erleichtern das Umspülen der Boden- und der Mantelwand des Auffangbehälters mit der Kühlflüssigkeit, insbesondere Wasser, nach dem Naturumlaufprinzip und ermöglichen damit eine effektive Kühlung.

Für die rotationssymmetrische, gleichförmige Kühlung des Auffangbehälters nach dem Naturumlaufprinzip ist gemäß einer Weiterbildung der Erfindung vorgesehen, daß eine Einlaßkanalanordnung in die bodenseitigen Kühlkanäle im Zentralbereich der Bodenwand des Auffangbehälters über eine Einlaßkammer mündet, daß von der Einlaßkammer die bodenseitigen Kühlkanäle sich nach außen bis zum Kantenbereich des Auffangbehälters erstrecken, und daß sich an den Kantenbereich ein mantelseitiger, nach oben verlaufender Kühlkanal anschließt welcher in die Auslaßkanalanordnung mündet. Die Einlaßkanalanordnung durchdringt dabei zweckmäßigerweise den Bodenbereich der Trag- und Schutzstruktur und erstreckt sich von der Bodenwand einer das äußere Kühlwasserreservoir bildenden Kammer bis zum Zentralbereich der Bodenwand des Auffangbehälters. Dementsprechend durchdringt die Auslaßkanalanordnung die Umfangswand der Trag- und Schutzstruktur, bildet eine Fortsetzung des mantelseitigen Kühlkanals und mündet in das Kühlwasserreservoir in dessen oberem Pegelbereich.

Für die Schutzbarrierenfunktion des Auffangbehälters ist es vorteilhaft, wenn der Grundkörper des Auffangbehälters von einem Tiegel, bestehend aus einer rostfreien, temperaturbeständigen Stahllegierung, gebildet ist, daß die inneren Boden- und Mantelflächen des Tiegels mit einem Schutzmantel ausgekleidet sind, welcher dem Schutz des Tiegelmaterials gegen Schmelzangriff dient, und wenn als zweite Schutzschicht für den Tiegel auf den Schutzmantel ein Opfermaterial-Depot folgt, dessen Menge zur Reaktion mit dem maximal möglichen Kernschmelzvolumen, welches bei einem eventuellen Störfall in den Auffangbehälter eindringt, ausreicht. Der Schutzmantel besteht bevorzugt aus einer der folgenden Legierungen, und zwar einzeln oder in Kombination: MgO, UO₂ oder ThO₂. Die Auskleidung mit einem Opfermaterial-Depot in Form von Granulat oder einer noch grobkörnigeren Schüttung oder bevorzugt in Form eines Mauerwerks aus Abschirmbetonsteinen hat den Zweck, die Stoffwerte des Gemisches gezielt zu verändern, z.B. um:
- die Wand des Auffangbehälters vor hohen Temperaturen unmittelbar nach Austreten der Kernschmelze in den Auffangbehälter zu schützen;
- Energie durch Aufschmelzen des Opfermaterials zu verbrauchen, mit der Folge, das Aufheizen der Schmelze zu verzögern und damit für die Kühlung mit niedrigeren Werten für die Nachzerfallswärme rechnen zu können;
- die Kernschmelze dünnflüssiger zu machen;
- ihre Wärmeleitfähigkeit zu erhöhen;
- ihre Oberfläche zu vergrößern;
- die Wärmeübertragung von der Kernschmelze auf Kühlflächen zu verbessern;
- durch Verdrängung von Wasservolumina Dampfexplosionen zu verhindern;
- durch die bekannten Eigenschaften des Opfermaterials definierte Berechnungsunterlagen zu schaffen, und
- den Schmelzpunkt des Gemisches und die Temperatur der Schmelze zu erniedrigen.

Die weiter oben erläuterten Kanalkörper in ihrer Eigenschaft als Strömungsleitkörper zur Erzeugung einer Turbulenzströmung im äußeren Kühlsystem sind gemäß einer bevorzugten Ausführungsform als sogenannte Deltaflügel in Gestalt von Prismen mit dreiseitigen Flächen ausgebildet, welche zumindest an dem der Auffangbehälter-Bodenwand mit Kühlspalt gegenüberliegenden Boden der Trag- und Schutzstruktur befestigt sind. Solche Deltaflügel haben sich zur Erzeugung einer Turbulenzströmung im Kühlspalt als besonders effektiv erwiesen. Die Deltaflügel helfen, einen Dampffilm an der Plattenunterseite zu vermeiden, wodurch andernfalls die Wärmeübergangszahl, die für den Wärmeübergang von der beheizten Platte zur Kühlwasserströmung maßgebend ist, unerwünscht reduziert würde. Durch die erzeugte Turbulenzströmung kann der Naturumlauf im Kühlspalt so intensiviert werden, daß zur sogenannten kritischen Heizflächenbelastung ein ausreichender Sicherheitsabstand eingehalten werden kann.

Eine günstige Ausführungsform für auch der Abstützung dienende Kanalkörper ist es, wenn diese als Rohrstutzen ausgebildet sind und die Rohrstutzen an ihren der Bodenwandpartie des Auffangbehälters zugewandten Enden mit Kanalaussparungen zur Erzeugung von Kühlwasserteilströmen versehen sind, so daß letztere die Bodenwand auch im Rohrstutzenbereich umspülen. Diese Rohrstutzen können entweder als einfache Strömungsleitkörper oder aber auch als turbulenzerzeugende Strömungsleitkörper ausgebildet sein. Im letzteren Fall ist eine Ausführungsform günstig, wonach pro Rohrstutzen jeweils zwei in Strömungsrichtung fluchtende U-förmige Kanalaussparungen vorgesehen sind, deren Begrenzungen zur Turbulenzvergrößerung kantig ausgeführt sind.

Wie es bereits erläutert wurde, kommt dem Auffangbehälter auch eine Strahlenabschirmfunktion zu. Das dadurch gegebene Strahlenabschirmsystem wird vorteilhafterweise dadurch vervollständigt, daß ein Abschirmring oberhalb des Auffangbehälters und an diesen anschließend im Ringraum zwischen der Umfangswand der Trag- und Schutzstruktur und dem Außenumfang des Reaktordruckbehälters installiert ist. Der Abschirmring übernimmt insbesondere die Funktion des biologischen Schildes im Umfangsbereich des Reaktorkerns dort, wo die Umfangswand (biologischer Schild) durch Auslaßkanäle durchbrochen sind, so daß die vom Reaktorkern ausgehende radioaktive Strahlung von den Räumen außerhalb der Trag- und Schutzstruktur ferngehalten ist. Der Abschirmring besteht zweckmäßigerweise aus Abschirmbeton, der auch als Lecabeton bezeichnet wird. Der Abschirmring hat eine Wandstärke, die nahe an die Wandstärke des biologischen Schildes (Trag- und Schutzstruktur) heranreicht; seine Höhenausdehnung ist vorzugsweise etwas größer als seine Wandstärke. Es ist weiterhin vorteilhaft, den Abschirmring an seiner Oberseite abzuschrägen, damit eine größere Ringfläche als Austrittsquerschnitt für Luftkühlkanäle gegeben ist. Der Abschirmring wird bevorzugt an der Umfangswand der Trag- und Schutzstruktur verankert. Er kann insbesondere aus Spannbeton bestehen, und seine Stahlarmierung ist zweckmäßigerweise mit der Stahlarmierung der ebenfalls aus Spannbeton bestehenden Trag- und Schutzstruktur zu einem einheitlichen Stahlarmierungssystem vereinigt. Der Abschirmring kann aus Ortbeton gegossen werden, wobei eine entsprechende Schalung vorzusehen ist, er kann aber auch aus einzelnen Ringsegmenten, die vorgefertigt sind, zusammensetzbar sein. Im letztgenannten Fall sind die Ringsegmente des Abschirmrings zweckmäßigerweise miteinander und mit der Umfangswand der Trag- und Schutzstruktur verzahnt.

Besonders vorteilhaft ist es auch, wenn das äußere Kühlsystem des Auffangbehälters als ein duales Luft- und Wasser-Kühlsystem ausgebildet ist, welches im Normalbetrieb der Kernreaktor-Anlage, d.h. bei trockenem äußerem Kühlsystem, der Luftkühlung des Kernreaktordruckbehälters bzw. der Außenseite einer diesen umgebenden Wärmedämmung dient, zu welchem Zweck die Einlaßkanalanordnung an eine Kühlluftquelle und die Auslaßkanalanordnung an eine Kühlluftsenke angeschlossen sind.

Eine an den Auffangbehälter und den Abschirmring sowie an das duale Kühlsystem angepaßte Wärmedämmung wird vorzugsweise aus austenitischen Ganzmetall-Kassetten zusammengesetzt. Ein zusätzlich zum äußeren dualen Kühlsystem vorgesehenes weiteres Luftkühlsystem dient vorteilhafterweise zur Belüftung eines oberen Kühlluftraums, der oberhalb des Auffangbehälters angeordnet und an seinem inneren Umfang durch die den Reaktordruckbehälter mit Ringspalt umgebende Wärmedämmung begrenzt ist.

Eine vorteilhafte Weiterbildung der Erfindung besteht darin, daß der Auffangbehälter in der oberen Hälfte seiner Mantelwand von wenigstens einem Schmelzkühlrohr durchdrungen ist, welches bei einer Mehrschichtstruktur des Auffangbehälters durch dessen Tiegelwand, Schutzschicht, Opfermaterial- Depot und Wärmedämmung hindurchragt, an seinem inneren Ende mittels Schmelzstopfen abgedichtet und von außen nach innen mit Gefälle verlegt sowie einlaufseitig an einen Kühlflüssigkeitsspeicher angeschlossen ist, so daß bei im Auffangbehälter vorhandener Kernschmelze der Schmelzstopfen auf seine Schmelztemperatur aufgeheizt und zum Schmelzen gebracht und somit einen Strömungsweg für die Kühlflüssigkeit zur Oberfläche der Kernschmelze freigegeben wird. Diese Maßnahmen tragen wesentlich zur Erfüllung der eingangs unter (a) aufgestellten Forderung bei, ebenso zur Erfüllung der Forderung (c), weil dadurch eine Oberflächenkühlung der Kernschmelze erreicht werden kann. Eine solche Oberflächenkühlung ist vom Sicherheitsstandpunkt unproblematisch, weil der nicht schlagartig entstehende, sondern sich kontinuierlich entwickelnde Dampf durch die vorhandenen Spalte und Kühlspalte nach oben entweichen sowie an den Containment-Wänden und zusätzlich installierten Rückkühl-Wärmetauscherheizflächen kondensieren kann, so daß das kondensierte Wasser wieder dem Kühlwasserreservoir (Sumpfwasser) zuströmen kann. Zweckmäßigerweise befindet sich der Einlaß des Schmelzkühlrohres außerhalb der Trag-und Schutzstruktur und steht mit dem Kühlwasserreservoir in Verbindung, wobei das Schmelzkühlrohr demgemäß die Umfangswand der Trag- und Schutzstruktur sowie den Abstandszwischenraum des äußeren Kühlsystems durchdringt.

Gegenstand der Erfindung ist auch ein Verfahren zum Ingangsetzen und Aufrechterhalten einer Außenkühlung der Kernrückhaltevorricthtung bei der vorbeschriebenen Kernreaktor-Anlage, wie in Anspruch 22 beschrieben, mit welchem die Aufgabe gelöst wird, im Falle eines Auslegungsstörfalls vorbereitende Maßnahmen zur Ingangsetzung einer Naturumlaufkühlung des Auffangbehälters zu treffen und letztere durchzuführen.

Die Erfindung wird im folgenden anhand mehrerer in der Zeichnung dargestellter Ausführungsbeispiele noch näher erläutert. In der Zeichnung zeigen:
Figur 1 eine Kernreaktor-Anlage und eine zugehörige Kernrückhaltevorrichtung nach der Erfindung im Ausschnitt des unteren Bereichs eines kugelförmigen Sicherheitsbehälters und des zugehörigen Betonfundaments, woraus insbesondere der Reaktordruckbehälter, der unter ihm befindliche Auffangbehälter und das Kühlwasserreservoir ersichtlich sind;
Figur 2 mit den beiden Teilfiguren 2A, 2B den Gegenstand nach Figur 1 vergrößert im Detail und in einem Axialschnitt längs der Schnittebene II-II aus Figur 4, woraus der Auffangbehälter mit seinem äußeren Kühlsystem noch deutlicher zu erkennen ist;
Figur 3 mit den beiden Teilfiguren 3A, 3B den Gegenstand aus Figur 2 in einem Axialschnitt gemäß der Schnittebene III-III aus Figur 4, welche zur Schnittebene II-II um einen Winkel von 77,5 ° gedreht ist;
Figur 4 einen achsnormalen Schnitt nach der Schnittebene IV-IV aus Figur 2A, 2B;
Figur 5 perspektivisch im Ausschnitt einen Kanalkörper, der als Abstützkörper für den Auffangbehälter und als Strömungsleitkörper dient und hierzu zwischen der Bodenwand des Auffangbehälters und einem Bodenbereich der Trag- und Schutzstruktur eingefügt ist, wobei zusätzlich sogenannte Deltaflügel zur Turbulenzerzeugung im Kühlspalt angeordnet sind und
Figur 6 einen Kanalkörper nach Figur 5 im Teilschnitt, aus dem ein Federelement zur federelastischen Abstützung ersichtlich ist.

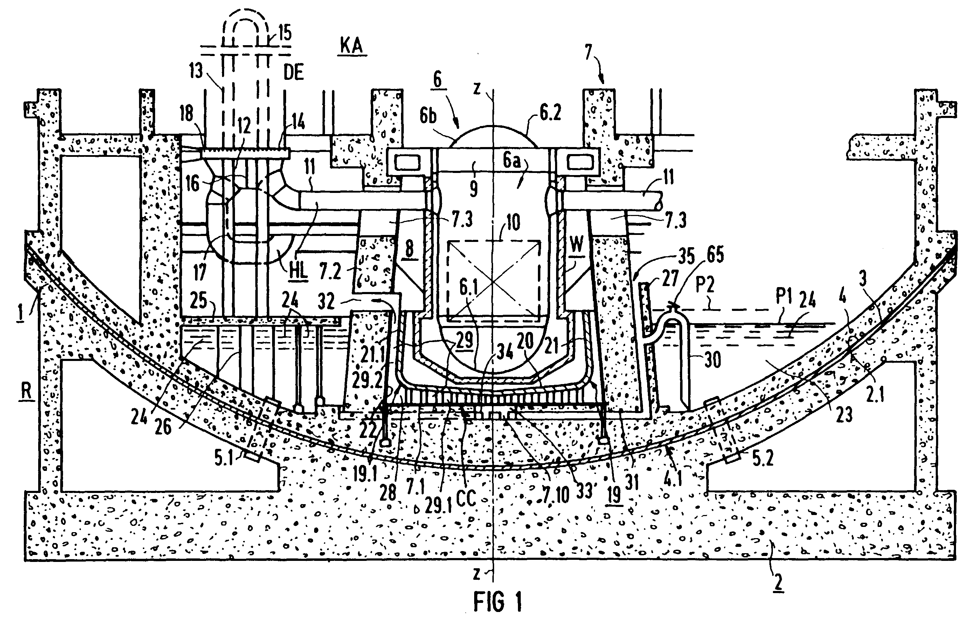

Das im Ausschnitt in Figur 1 dargestellte Reaktorgebäude R besteht aus einem Sicherheitsbehälter 1, auch Containment genannt, gebildet durch eine kugelförmige Stahldichthaut 3, aus einem eine entsprechende Aufnahmekalotte 2.1 aufweisenden Stahlbetonfundament 2 und aus der innerhalb des Sicherheitsbehälters 1 angeordneten Kernreaktoranlage KA, umfassend Anlagenkomponenten und verbindende Rohrleitungen, elektrische Leitungen sowie Gebäudestrukturen, welche gasdicht von der kugelförmigen Stahldichthaut 3 umgeben wird. Letztere wird mit Spalt noch von einer nicht näher dargestellten, mit dem Stahlbetonfundament 2 verbundenen Betonhülle umgeben, welche den Sicherheitsbehälter 1 gegen Einwirkungen von außen ("Eva") schützt. Die Betonstruktur 4 des Sicherheitsbehälters 1 paßt sich mit ihrer nach unten weisenden konvexen Kalotte 4.1 an die konvexe Stahldichthaut 3 und die entsprechend konkave Aufnahmefläche 2.1 des Betonfundaments 2 an. Die Betonstruktur 4 ist an ihren Kupplungsstellen, siehe die Kupplungsstellen 5.1 und 5.2, mittels die Stahldichthaut 3 dichtend durchgreifender Ankerbolzen mit dem Stahlbetonfundament 2 verbunden.

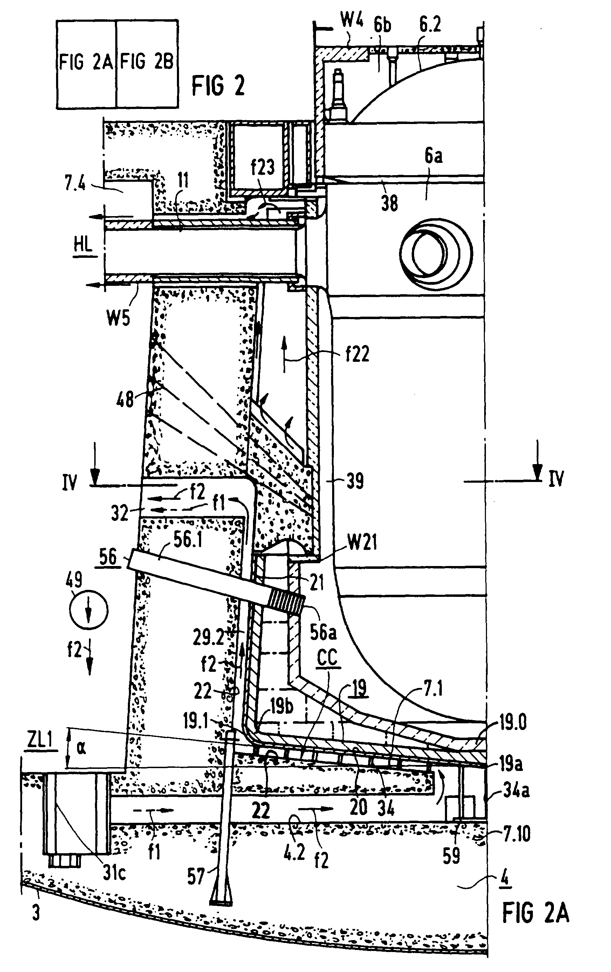

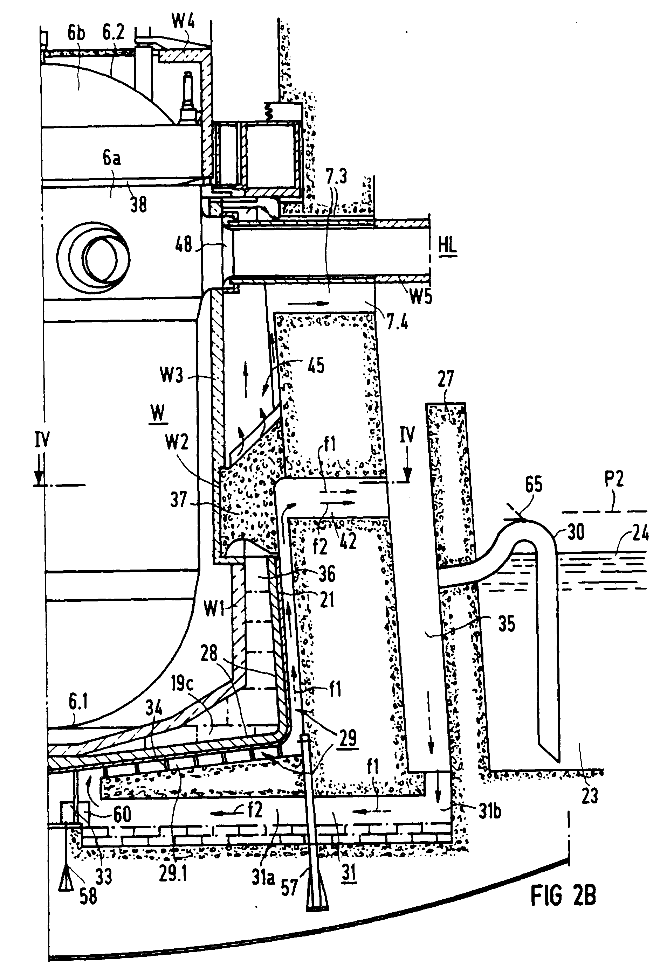

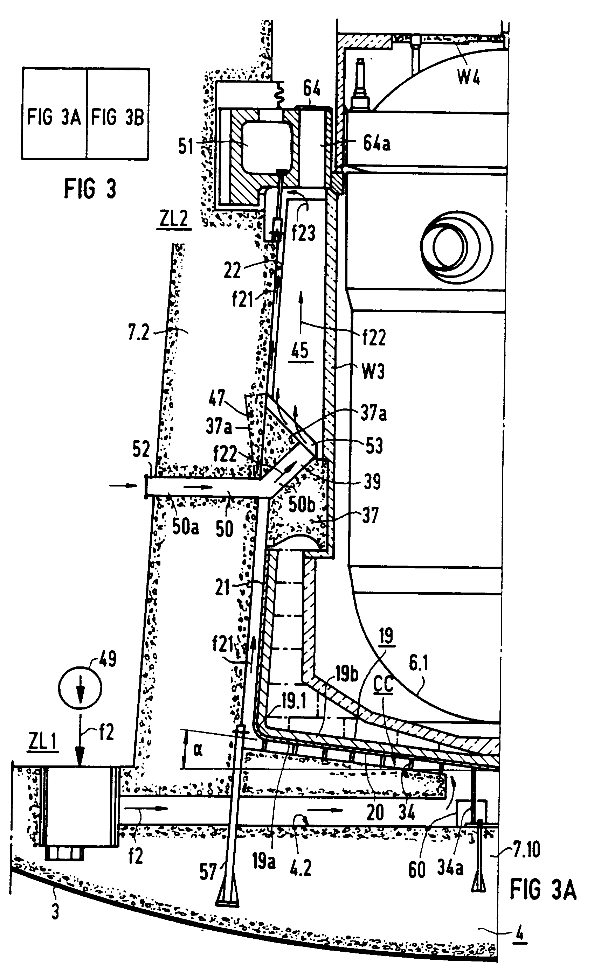

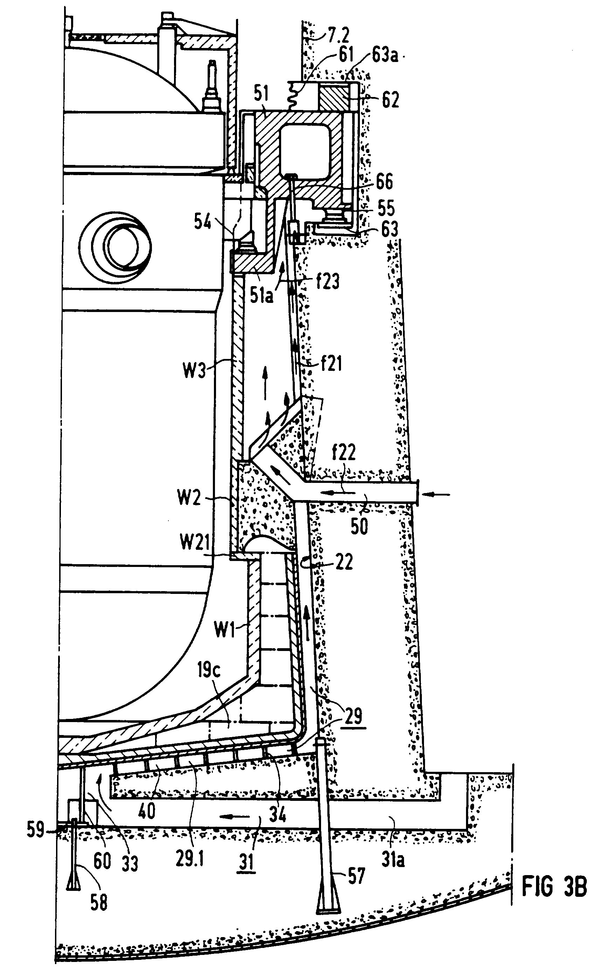

Der als Ganzes mit 6 bezeichnete Reaktordruckbehälter des Druckwassertyps ist von einer Trag- und Schutzstruktur 7 mit Abstand in lateraler und in vertikaler Richtung umgeben. Diese Trag- und Schutzstruktur 7 mit ihrem Boden oder Bodenbereich 7.1 und ihrer Um-fangswand 7.2 bildet einen Bestandteil der Betonstruktur 4 innerhalb des Containments 1; durch den Bodenbereich 7.1 und die Umfangswand 7.2 wird die Reaktorkaverne 8 gebildet, innerhalb welcher der Reaktordruckbehälter 6 angeordnet ist. Zum Bodenbereich 7.1 gehört auch eine zentrale, vertiefte Bodenpartie 7.10 einer vorzugsweise zentralen Einlaßkammer 33, die weiter unten noch erläutert wird. Der im wesentlichen hohlzylindrische Reaktordruckbehälter 6 mit einer vertikalen Achse z, bestehend aus dem Unterteil 6a mit Bodenkalotte 6.1 und dem Oberteil 6b mit Deckelkalotte 6.2, ist an einer Tragringkonstruktion 9 mit seinem Unterteil 6a aufgehängt. Die Tragringkonstruktion 9 ist in einer Ringausnehmung der Umfangswand 7.2 der Trag- und Schutzstruktur 7 gegen Abheben und Verdrehen abgesichert aufgelagert. Der Reaktordruckbehälter 6 ist innerhalb einer kreisförmigen Aussparung mit dem in Figur 1 nicht dargestellten Flansch seines Unterteils 6a und/ oder geeigneten Tragpratzen an der Tragringkonstruktion 9 verdrehungssicher und gegen Abheben gesichert aufgelagert. Der Reaktorkern 10 ist gestrichelt angedeutet. Dargestellt ist weiterhin von den Primärkreiskomponenten der Kernreaktor-Anlage KA ein Dampferzeuger DE, welcher über einen sogenannten heißen Strang 11 der Hauptkühlmittelleitungen HL an den Reaktordruckbehälter 6 angeschlossen ist. Der jeweilige heiße Strang 11 (es handelt sich um eine Mehr-Loop-Anlage) leitet das heiße Kühlmittel zur Primärkammer 12 des Dampferzeugers DE. Die Primärkammer 12 ist von der Sekundärkammer 13 des Dampferzeugers DE durch einen Rohrboden 14 und die bei 15 angedeuteten U-förmigen Wärmetauscherrohre abgetrennt. Die Primärkammer 12 ist außerdem durch eine Trennwand 16 in zwei Kammerhälften aufgeteilt. Das Primärkühlmittel gelangt also vom heißen Strang 11 über die eine Hälfte der Primärkammer 12 in die Wärmetauscherrohre 15, gibt dort seine Wärme an das Sekundärmedium ab, welches verdampft, und wird im Kreislauf über die zweite Hälfte der Primärkammer 12, den daran angeschlossenen sogenannten kalten Strang 17, eine in diesem kalten Strang 17 angeordnete (nicht dargestellte) Primärkreiskühlmittelpumpe und das Reststück des kalten Strangs 17 wieder in das Innere des Reaktordruckbehälters 6 rückgespeist. Es kann sich um eine sogenannte Zwei-Loop-Anlage handeln, also um einen Druckwasserreaktor mit zwei Dampferzeugern und je einem Hauptkühlmittel-Leitungspaar. Dies wäre beim Ausführungsbeispiel nach Figur 1 der Fall, wenn jedem der beiden heißen Stränge 11 je ein kalter Strang 17 (nur einer ist dargestellt) zugeordnet wäre. Es kann sich aber auch um eine Drei-Loop- oder Vier-Loop-Anlage handeln, wenn man sich in Figur 1 weitere Strangpaare hinzudenkt, oder wie man es aus der Darstellung nach Figur 2 und 3 entnehmen kann. Die Dampferzeuger DE sind in ihrem Rohrbodenbereich mittels Tragringen 18 an der Betonstruktur 4 aufgelagert.

Ein kühlbarer Auffangbehälter 19 einer Kernrückhaltevorrichtung CC ist innerhalb der Reaktorkaverne 8 mit seiner Bodenwand 20 unterhalb des Reaktordruckbehälters 6 angeordnet und erstreckt sich mit seiner Mantelwand 21 von der Bodenwand 20 nach oben.

Die vertikale, oder wie dargestellt, die leicht schräg nach innen gezogene Umfangswand 7.2 der Trag- und Schutzstruktur 7 wird auch als biologischer Schild bezeichnet, weil sie einen Schutzschild gegen Neutronen und Gammastrahlung bildet. An ihrem inneren Umfang ist sie mit einem Stahlliner 22 ausgekleidet, ebenso wie der Bodenbereich 7.1 an seinen Innenflächen. Außerhalb dieses Liners 22 und mit vertikalem und lateralem Abstand zum Auffangbehälter 19 befinden sich also der Bodenbereich 7.1 und die Umfangswand 7.2, welche mit der übrigen Betonstruktur 4 verbunden sind. Letztere ist in Kammerbauweise aufgebaut, wobei in einem Kammerraum 23, den man sich angenähert als Rotationskörper vorstellen muß und welcher die Umfangswand 7.2 (biologischer Schild) umgibt, der Reaktorsumpf in Gestalt eines Kühlwasserreservoirs 24 mit dem Normalpegel Pl angeordnet ist. Eine Decke 25 dieses Kammerraums 23 ist durch Stahlwände 26 abgestützt. Eine Trennwand 27 bildet mit einem U-förmigen Steigrohr 30 ein Einlaufbauwerk für eine Einlaßkanalanordnung 31. Die Hauptkühlmittelleitungen (heiße Stränge) 11 sind ebenso wie die aus Figur 1 nicht ersichtlichen kalten Stränge 17 durch entsprechende Wanddurchbrüche 7.3 in der Umfangswand 7.2 hindurchgeführt.

Der Auffangbehälter 19 erstreckt sich bevorzugt mit seiner Mantelwand 21 wenigstens bis etwa zur Unterkante des Reaktorkerns 10, wie dargestellt. Dabei weisen die Bodenwand 20 und die Mantelwand 21 des Auffangbehälters 19 einen Abstandszwischenraum 28 zum Boden 7.1 bzw. zur Umfangswand 7.2 der Trag-und Schutzstruktur 7 auf. Ein behälteräußeres Kühlsystem 29 mit boden- und mantelseitigen Kühlkanälen 29.1, 29.2 ist innerhalb dieses Abstandszwischenraums 28 zum Zwecke der Außenkühlung des Auffangbehälters 19 vorgesehen. Die Erfindung ist auf das dargestellte Kugelcontainment 1 nach den Figuren 1 bis 3 nicht beschränkt, sondern auch bei einem Zylindercontainment einsetzbar, bei welchem der Übergang von der Betonstruktur 4 des Sicherheitsbehälters 1 zum Fundament 2 nicht über Kugelflächen (so wie beim Ausführungsbeispiel nach Figur 1) erfolgt, sondern über ebene Übergangsflächen. - Zur weiteren Erläuterung sei im folgenden auf die detailliertere Darstellung nach Figuren 2 bis 6 Bezug genommen. Gleiche Teile zu Figur 1 tragen gleiche Bezugszeichen.

Die bodenseitigen Kühlkanäle 29.1 des äußeren Kühlsystems 29 sind über eine Einlaßkanalanordnung 31 und die mantelseitigen Kühlkanäle 29.2 sind über eine Auslaßkanalanordnung 32 an ein außerhalb der Trag- und Schutzstruktur 7 vorgesehenes, ein Reaktorgebäudesumpf bildendes oder mit diesem verbundenes Kühlwasserreservoir 24 mit einer solchen Steighöhe angeschlossen, daß bei heißem Auffangbehälter 19 und wassergefülltem Kühlsystem 29 eine Naturumlaufströmung im Kühlsystem 29 durch die Kühlkanäle 29.1 und 29.2 hindurch angefacht wird. Die Einlaßkanalanordnung 31 mündet in das äußere Kühlsystem 29 des Abstandszwischenraums 28 im Zentralbereich der Bodenwand 20 des Auffangbehälters 19 über eine Einlaßkammer 33. Von der Einlaßkammer 33 erstrecken sich die durch Turbulenzkörper 34 und die Bodenwand 20 sowie den Bodenbereich 7.1 der Trag- und Schutzstruktur 7 begrenzten bodenseitigen Kühlkanäle 29.1 nach außen bis zum abgerundeten Kantenbereich 19.1 des Auffangbehälters 19. Vom Kantenbereich 19.1 erstreckt sich anschliessend ein mantelseitiger, nach oben verlaufender Kühlkanal 29.2 bis zu der Auslaßkanalanordnung 32.

Wie man es aus Figuren 2 bis 4 erkennt, durchdringt die Einlaßkanalanordnung 31 den Bodenbereich 7.1 der Trag- und Schutzstruktur 7. Die Einlaßkanäle 31a verlaufen sternförmig bzw. radial-horizontal von einem kurzen vertikalen Eintrittskanalstück 31b bis zur Einlaßkammer 33. Im linken unteren Teil der Figuren 2 und 3 ist ein vertikales Einlaufkanalstück als Pumpensumpf-Kammer 31c ausgeführt (die Pumpe ist nicht dargestellt). Dem Einlaufkanalstück 31b ist eine Einlaufkammer 35 vorgeschaltet, die durch die Trennwand 27 vom Kammerraum 23 des Kühlwasserreservoirs 24 im Normalbetrieb abgetrennt ist; nur dann, wenn der Normalpegel P1 des Kühlwassers steigt, und zwar auf einen Hochwasser- oder Mindestwasserstand P2, gelangt Kühlwasser über das Steigrohr 30 in die Einlaufkammer 35 und in die übrige Einlaßkanalanordnung 31, was weiter unten noch erläutert wird. Die Auslaßkanalanordnung 32 durchdringt die Umfangswand 7.2 der Trag- und Schutzstruktur 7, bildet eine Fortsetzung des mantelseitigen Kühlkanals 29.2 und mündet in das Kühlwasserreservoir 24 in dessen oberem Pegelbereich P2 (nur aus Figur 1 erkennbar).

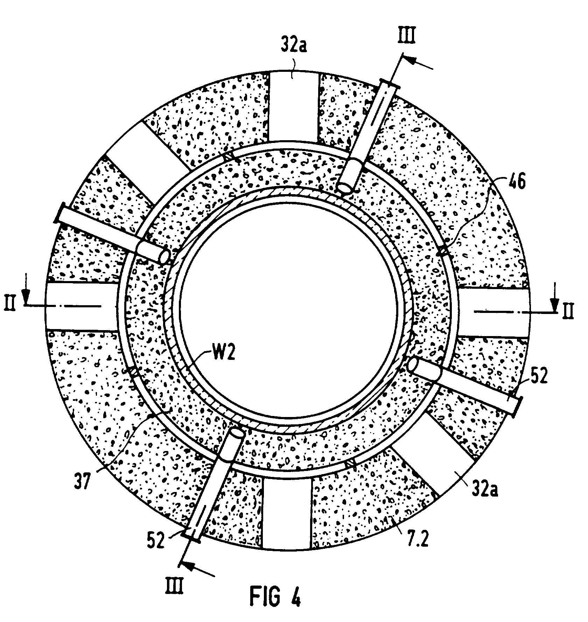

Figur 4 zeigt, daß die Auslaßkanäle 32a der Auslaßkanalanordnung 32 über den Umfang der Wand 7.2 verteilt sind; dargestellt sind sechs Auslaßkanäle, davon vier in Achsenkreuz-Anordnung und zwei zusätzliche Auslaßkanäle im ersten und dritten Quadranten der Umfangswandteile 7.2.

Der Auffangbehälter 19 ist - wie aus Figuren 2 und 3 (und auch aus Figur 1) ersichtlich - tiegelartig ausgebildet, und hierzu ist seine Bodenwand 20 nach unten bzw. nach außen ausgewölbt. Die Bodenwand 20 geht über den abgerundeten Kantenbereich 19.1 in die Mantelwand 21 über. Der Grundkörper 19a des Auffangbehälters 19 wird von einem Tiegel gebildet, der vorzugsweise aus einer temperaturbeständigen Stahllegierung besteht. Die inneren Boden- und Mantelflächen des Tiegels 19a sind mit einem Schutzmantel 19b ausgekleidet, welcher dem Schutz des Tiegelmaterials gegen Schmelzangriff dient. Dieser Schutzmantel 19b besteht bevorzugt aus einer der folgenden Legierungen, einzeln oder in Kombination: MgO, UO₂ oder ThO₂. Als zweite Schutzschicht für den Tiegel 19a folgt auf den Schutzmantel 19b ein Opfermaterial-Depot 19c. Dieses besteht vorzugsweise aus Abschirmbetonsteinen 36, welche miteinander und dem Schutzmantel 19b zu einer Ausmauerung verbunden sind. Der Abstand des Opfermaterial-Depots 19c in Gestalt der Ausmauerung zur Bodenkalotte 6.1 des Reaktordruckbehälters 6 ist ausreichend groß, so daß die der Bodenkalotte zugewandten Flächen der Ausmauerung mit einem Wärmedämmantel W1 ausgekleidet werden können. Bei diesem Wärmedämmantel W1 handelt es sich um die untere Dämmpartie einer als Ganzes mit W bezeichneten Wärmedämmung für den Reaktordruckbehälter 6. Die untere Dämmpartie W1 ist von etwa topfförmiger Gestalt. Diese untere Dämmpartie, wie auch die mittlere Dämmpartie W2 am inneren Umfang eines Abschirmrings 37 und eine obere Dämmpartie W3, welche sich vom Abschirmring 37 zum Bereich der Deckelteilfuge 38 des Reaktordruckbehälters 6 erstreckt, umgeben alle den Reaktordruckbehälter 6 mit ausreichendem Spalt, so daß eine Luftkammer 39 gebildet wird.

Der Auffangbehälter 19 ist also ein topf- oder tiegelartiges Mehrschicht-Gebilde mit einem Grundkörper 19a in Form eines Tiegels, der z.B. eine Wandstärke von 50 mm haben kann, einem die Tiegelinnenseite auskleidenden Schutzmantel 19b von z.B. im Vergleich zum Tiegel dreifachen Wandstärke. Dieser Schutzmantel ist vorzugsweise im Zentralbereich 19.0 des Auffangbehälters in seiner Wandstärke vergrößert, weil in diesem Bereich die größten Temperaturbeanspruchungen durch eine eventuelle Kernschmelze auftreten könnten. Auf den Schutzmantel folgt, wie erwähnt, das sich der Tiegelkontur anpassende Opfermaterial-Depot 19c und die entsprechend angepaßte untere Dämmpartie W1. Die Mantelwand 21 des Tiegels 19a bzw. Auffangbehälters 19 verläuft bevorzugt vom abgerundeten Kantenbereich 19.1 bis zum oberen Rand 21.1 schwach konisch verjüngt. Hierdurch ist die Kontur des Außenumfangs des Auffangbehälters 19 bzw. Tiegels 19a an die Kontur des Innenumfangs der Umfangswand 7.2 der Trag- und Schutzstruktur 7 angepaßt, und es wird der gewünschte Querschnitt für den Abstandszwischenraum 28 bzw. die mantelseitigen Kühlkanäle 29.2 des Kühlsystems 29 erzielt. Die Bodenwandpartie 20 des Tiegels 19a bzw. Auffangbehälters 19 erweitert sich von dem tiefsten Zentralbereich 19.0 bis zum Kantenbereich 19.1 in Form eines flachen Kegelmantels, dessen in axial-radialen Schnittebenen liegende Schnittflächen mit einem kleinen Steigungswinkel α zur Horizontalen verlaufen. Diese vom Zentralbereich 19.0 bis zum Kantenbereich 19.1 vorhandene schwache Steigung der Bodenwand 20 führt zu definierten Kühlwasserströmen im Kanalsystem 29, in dem sich keine Luftblasen ausbilden oder halten können (Vermeidung sogenannter toter Kühlzonen). Vielmehr unterstützt diese schwache Steigung den Naturumlauf. Im Inneren des Auffangbehälters 19 besteht demnach ein schwaches Gefälle vom Kantenbereich 19.1 bis zum Zentralbereich 19.0, so daß sich eine eventuelle Kernschmelze immer zentrisch innerhalb des Auffangbehälters 19 (flüssiger Zustand vorausgesetzt) sammelt.

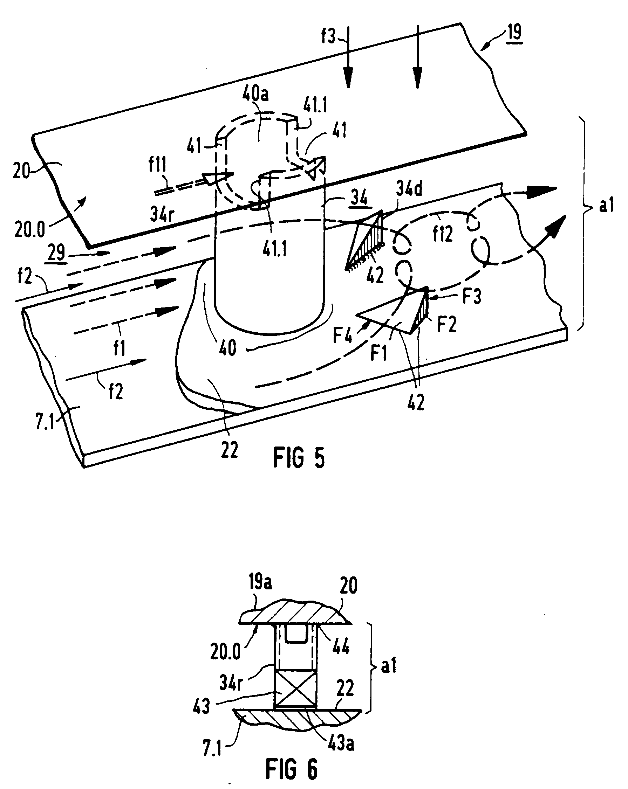

Gemäß einer bevorzugten Ausführungsform ist der Auffangbehälter 19 auf dem Bodenbereich 7.1 der Trag- und Schutzstruktur 7 mittels der Turbulenzkörper 34 aufgelagert. Dies schließt, wo notwendig, eine zusätzliche Abstützung mittels Abstützkörpern (nicht dargestellt) nicht aus. Es können auch Turbulenzkörper 34d vorgesehen sein, die nur der Turbulenzerzeugung (und nicht der Abstützung) dienen, wie weiter unten anhand von Figur 5 noch erläutert wird. Die Turbulenzkörper 34 sind im äußeren Kühlsystem 29 zwischen der Bodenwand 20 des Auffangbehälters 19 bzw. Tiegels 19a und dem Bodenbereich 7.1 eingefügt und dienen zur Abstützung des Auffangbehälters 19 auf dem Bodenbereich 7.1 und zur Erzeugung einer Turbulenzströmung der Kühlflüssigkeit. In den Figuren 2 und 3 sind im bodenseitigen Kühlkanal 29.1 nur Turbulenzkörper 34 dargestellt, welche nicht nur der Strömungsleitung und Turbulenzerzeugung dienen, sondern auch der Abstützung. Dies trifft auch für die im Zentralbereich 19.0 angeordneten zentralen Kanalkörper 34a zu. Diese stützen sich auf der zentralen, vertieften Bodenpartie 7.10 ab, welche zum Bodenbereich 7.1 zählt und sich auf dem Niveau der unteren Wand 4.2 der Einlaufkanäle 31 befindet. Da sie eine größere Kanalhöhe der Einlaßkammer 33 überbrücken müssen, sind sie länger als die Turbulenzkörper 34. Die Turbulenzkörper 34, 34a sind innerhalb der bodenseitigen Kühlkanäle 29.1 und innerhalb der Einlaßkammer 33 derart verteilt angeordnet, daß erstens eine gleichmäßige Gewichtsabtragung in den Bodenbereich 7.1 der Trag- und Schutzstruktur 7 gewährleistet ist, zweitens sich Kühlströmungsgassen 40 (vgl. Figur 5) längs eines Weges von innen, also von der zentralen Einlaßkammer 30, nach radial außen zum Kantenbereich 19.1 und von hier in den mantelseitigen Kühlkanal 29.2 gerichtet ausbilden können. Letzterer ist ein Ringkanal. Die Kühlströmungsgassen 40 können in ihrer Hauptrichtung längs Radien, also sternförmig, oder z.B. evolventenförmig verlaufen, wobei die Turbulenzkörper 34, 34a bei inganggesetzter Naturumlaufströmung im Kühlsystem, insbesondere innerhalb der bodenseitigen Kühlkanäle 29.1, eine Turbulenzströmung erzeugen.

Figuren 5 und 6 zeigen nähere Einzelheiten zur Ausbildung und Anordnung der Turbulenzkörper 34 (für die Turbulenzkörper 34a gilt das Entsprechende). Generell sind die Strömungspfeile für die Kühlflüssigkeit, insbesondere Kühlwasser, mit f1 bezeichnet und in gestrichelten Linien dargestellt. Die Strömungspfeile für die Kühlluft sind generell mit f2 bezeichnet und mit durchgezogenen Linien dargestellt (vgl. auch Figuren 1 bis 3). In den Kühlkanälen, z.B. 29.1 und 29.2, kann entweder nur Kühlluft (Pfeile f2, ausgezogen) oder Kühlwasser (Pfeile f1, gestrichelt) strömen, was noch erläutert wird. Die Wärmeflußpfeile in Figur 5 für die Wärmeströmung, die vom Reaktordruckbehälter 6 bzw. einer eventuellen Kernschmelze ihren Ausgang nimmt und in den Auffangbehälter 19, insbesondere dessen Tiegel 19a und die Bodenwand 20 dieses Tiegels, eindringt, sind generell mit f3 bezeichnet und mit starken ausgezogenen Linien dargestellt. Die Pfeile f1 symbolisieren also die Notkühlwasserströmung im Kühlsystem 29.

Figur 5 zeigt in perspektivischer, schematischer Darstellung einen Ausschnitt des Kühlsystems 29, und zwar im Bereich der Bodenwandpartie 20 des Auffangbehälters 19 und des mit Kühlspalt al gegenüberliegenden Bodens 7.1 mit Liner 22 der Trag-und Schutzstruktur 7. Der dargestellte Turbulenzkörper 34 ist als Rohrstutzen ausgebildet (diese Ausführung gilt bevorzugt für alle Turbulenzkörper 34 nach Figuren 1 bis 3). Diese Rohrstutzen werden zur Unterscheidung von den generellen Turbulenzkörpern 34 mit 34r bezeichnet, und die noch zu erläuternden, Turbulenz erzeugenden Deltaflügel mit 34d. Die Rohrstutzen 34r sind an ihren der Bodenwandpartie 20 des Auffangbehälters 19 zugewandten Enden jeweils mit Kanalaussparungen 41 versehen. Insbesondere sind pro Rohrstutzen 34r jeweils zwei in Strömungsrichtung (Hauptrichtung der Strömungspfeile f1) fluchtende U-förmige Aussparungen 41 vorgesehen, deren Begrenzungen 41.1 zur Turbulenzvergrößerung kantig ausgeführt sind. Durch die Kanalaussparungen 41 mit ihren Kanten 41.1 werden Kühlwasserteilströme f11 erzeugt, welche im Bereich der Turbulenzkörper 34 im allgemeinen und der Rohrstutzen 34r im besonderen in Kontakt mit den Kühlflächen der Bodenwandpartie 20 gezwungen werden. Wesentlich ist es, innerhalb der Kühlströmungsgassen 40 und der Kühlpfade 40a der Kühlwasserteilströme f11 eine solch große Turblenz der Strömung zu erzeugen, daß eine innige Durchmischung der Kühlwasserteilströme erreicht und die Bildung eines Dampffilmes an den nach unten weisenden Kühlflächen 20.0 der Bodenwandpartie 20 vermieden wird. Hierzu sind sogenannten Deltaflügel 34d in Gestalt von Prismen mit Dreiecksflächen F1 bis F4 vorgesehen, welche die Gestalt von Tetraedern haben. Diese sind zumindest an den der Kühlfläche 20.0 mit Kühlspalt al gegenüberliegenden Boden 7.2 bzw. an dem Liner 22 dieses Bodens befestigt. Die Deltaflügel 34d oder allgemein Strömungsleitkörper werden bevorzugt aus einem korrosionsbeständigen Stahl gefertigt, der in seiner Zusammensetzung der Stahllegierung des Liners 22 gleicht oder ähnelt, so daß sie durch Schweißen befestigt werden könnnen (bei 42 sind Schweißnähte angedeutet). Der besseren Übersicht wegen sind in Figur 5 nur zwei Deltaflügel 34d dargestellt, und es ist dabei schematisch durch die spiraligen Strömungslinien f12 angedeutet, welchen Effekt diese Strömungsleitkörper in Form von Deltaflügeln 34d auf eine sonst weitgehend laminar verlaufende Strömung ausüben: Es wird eine kräftige Verwirbelung erzeugt, die den Sicherheitsabstand gegen Filmsieden an den Kühlflächen 20.0 vergrößert.

Aus Figur 6 erkennt man, daß der Auffangbehälter 19 über seine auch als Abstützkörper dienenden Rohrstutzen 34r und federelastisch unter Zwischenschaltung eines Federelementes 43 auf dem Boden 7.1 abgestützt ist. Der Rohrstutzen 34r ist an der Bodenwand 20 des Tiegels 19a bzw. Auffangbehälters 19 festgeschweißt (Schweißnähte 44), wobei wieder die Stahllegierungen der Rohrstutzen 34r und des Tiegels 19a so aufeinander abgestimmt sind, daß eine Schweißverträglichkeit gegeben ist.

Bei den Federelementen 43 kann es sich um Schraubendruckfedern handeln, die mit einem unteren Federteller 43a an den Bodenteilen 7.1 und über einen weiteren (nicht dargestellten) Federteller an ihrem oberen Ende an den Rohrstutzen 34a abgestützt sind. Anstelle von Schraubendruckfedern lassen sich auch Tellerfedern oder Tellerfederpakete verwenden (nicht dargestellt), wobei wegen der hohen abzustützenden Gewichte Schraubendruck- oder Tellerfedern zweckmäßigerweise vorgespannt werden. Der untere Federteller 43a ist an seiner Unterseite vorzugsweise feinst bearbeitet, d.h. geglättet, so daß die Reibkräfte zur anliegenden Fläche des Stahlliners 22 möglichst klein sind. Durch die Ermöglichung einer, wenn auch nur mit kleinen Wegen, gleitenden Bewegung lassen sich Zwangskräfte bei der Aufheizung im hypothetischen Kernschmelzfall vermeiden. Die Federelemente 43 können auch als Federstäbe ausgebildet sein (ebenfalls nicht dargestellt), die ein federelastisches Ausweichen in lateraler Richtung in begrenztem Umfang gestatten.

Die in Figur 5 dargestellten Deltaflügel 34d können mit Vorteil zur Erzeugung einer Turbulenzströmung innerhalb eines Kühlkanals nicht nur im Rahmen des dargestellten Ausführungsbeispiels, sondern auch überall dort verwendet werden, wo der Kühlkanal von einem flüssigen Kühlmittel durchströmt wird und durch zwei übereinander angeordnete, zueinander beabstandete Kanalwände in vertikaler Richtung begrenzt wird, und zwar von einer oberen, von der abzuführenden Wärme beheizten ersten Kanalwand und einer unteren, auf ihrer Innenseite mit den Deltaflügeln 34d versehenen zweiten Kanalwand.

Zurück zu den Figuren 1 bis 3: Grundsätzlich wäre es möglich, den Auffangbehälter 19 mit seinem Tiegel 19a an der Trag- und Schutzstruktur 7 hängend zu lagern. In diesem Fall könnte z.B. die Mantelwand 21 weiter hochgezogen werden und mit einem Tragflansch an ihrem oberen Ende an einem Tragring, der in eine Ringaussparung der Wandteile 7.2 der Trag- und Schutzstruktur 7 eingefügt ist, aufgelagert werden (diese Ausführung ist nicht dargestellt). Auch bei einer solchen Ausführung könnten die Turbulenzkörper 34, 34a, zumindest teilweise, als Abstützkörper, also nicht nur alleine als Strömungsleitkörper, dienen bzw. mit einem engen Spalt unterhalb der Bodenwand 20 als Sicherheit gegen Abstürzen angeordnet sein. Günstiger ist indessen die dargestellte Ausführungsform mit einer Auflagerung des Auffangbehälters 19 auf den Kanalkörpern 34, 34a, weil dadurch die Umfangswand 7.2 (biologischer Schild) nicht zusätzlich belastet wird; vielmehr erfolgt die Abtragung der Auflagerkräfte über den wesentlich größeren Flächenbereich der Betonstruktur 4 und des Bodenbereichs 7.1.

Der Auffangbehälter 19 reicht bevorzugt mindestens bis etwa zur Unterkante des Reaktorkerns 10 (siehe Figur 1); wie eingangs erläutert, ist damit auch für die erforderliche Steighöhe von mindestens ca. 3 m gesorgt, die für den Naturumlauf der Kühlflüssigkeit durch das Kühlsystem 29 benötigt wird. Der Auffangbehälter 19 umgibt damit die gesamte Bodenkalotte 6.1. Bei der dargestellten Höhenerstreckung des Auffangbehälters 19 ist es ein bevorzugtes Ausführungsmerkmal, einen Abschirmring 37 (vgl. Figuren 2 bis 4) vorzusehen, der oberhalb des Auffangbehälters 19 und an diesen anschließend im Ringraum 45 zwischen der Umfangswand 7.2 der Trag- und Schutzstruktur 7 und dem Außenumfang des Reaktordruckbehälters 6 installiert ist. Der Abschirmring 37 übernimmt die Funktion des biologischen Schildes im Bereich des Kerns 10 (Figur 1) dort, wo die Umfangswand 7.2 (biologischer Schild) durch Auslaßkanäle 32 durchbrochen sind. Der Abschirmring 37 besteht bevorzugt aus Abschirmbeton. Geeignete Zusammensetzungen für einen solchen Abschirmbeton lassen sich aus der Tabelle XXIV auf Seite 701 des Buches "Nutzenergie aus Atomkernen" von Dr. K. R. Schmidt, Bd. II, Verlag Walter D. Gruyter & Co., Berlin 1960, entnehmen, so daß von einer näheren Erläuterung hier abgesehen werden kann. Der Abschirmring 37 ist an der Umfangswand 7.2 der Trag- und Schutzstruktur 7 verankert. Hierzu können keilförmige Leisten 46, über den Außenumfang des Abschirmrings 37 gleichmäßig verteilt, vorgesehen sein, wie es aus Figur 4 hervorgeht. Es ist auch möglich, so wie es in Figur 3 gestrichelt dargestellt ist, keilförmige Abstützflächen 47 an der Umfangswand 7.2 vorzusehen, mit denen der Abschirmring 37 mit eigenen keilförmigen Gegenflächen 37a verzahnt ist. Für die Montage des Abschirmrings 37 ist es günstig, wenn er aus einzelnen Ringsegmenten zusammengesetzt ist (nicht im einzelnen dargestellt). Die Ringsegmente sind dann miteinander und mit der Umfangswand 7.2 der Trag- und Schutzstruktur 7 zu verzahnen (Figur 3) oder zu verkeilen (Figur 4). Eine weitere günstige Ausführungsvariante besteht darin, daß der Abschirmring 37 aus abschirmendem Spannbeton besteht und seine Stahlarmierung mit der Stahlarmierung der ebenfalls aus Spannbeton bestehenden Trag- und Schutzstruktur 7 zu einem einheitlichen Stahlarmierungssystem vereinigt ist. Für eine solche Ausführungsform sind im linken Teil der Figur 2 gestrichelt Armierungsstahlseile 48 angedeutet. Es können weitere Ringspannseile innerhalb des Abschirmrings 37 vorgesehen sein, mit denen seine einzelnen Ringsegmente, die miteinander verzahnt sind, in Umfangsrichtung zusammengespannt werden (nicht dargestellt).

Zur Minimierung der Wärmeverluste des Reaktordruckbehälters 6 im Normalbetrieb kommt seiner Wärmedämmung W - siehe Figuren 2 und 3 - eine große Bedeutung zu. Ebenso wichtig ist die Belüftung dieser Wärmedämmung an ihrer Außenseite durch die als Ganzes mit den Strömungspfeilen f2 symbolisieren Kühlluftströme. Die Wärmedämmung W besteht aus den Wärmedämmpartien W1 bis W3 für den Unterteil 6a des Reaktordruckbehälters 6, einer den Oberteil 6b des Reaktordruckbehälters 6 übergreifenden beweglichen (demontierbaren) Wärmedämmhaube W4 und weiteren Wärmedämmpartien W5 für die Hauptkühlmittelleitungen HL. Für den Unterteil 6a sind im wesentlichen drei ineinander übergehende Dämmpartien vorgesehen: eine untere Dämmpartie W1, welche die Opferschicht des Auffangbehälters 19 auskleidet und die Bodenkalotte 6.1 des Reaktordruckbehälters 6 umgibt (a), eine mittlere Dämmpartie W2, welche den Innenumfang des Abschirmrings 37 auskleidet. Dazu gehört ein ringförmiges Verbindungsstück W21, welches den Abschirmring untergreift und den Anschluß zur unteren Dämmpartie W1 herstellt (b), und eine obere Dämmpartie W3, welche sich vom Abschirmring 37 bis zum Bereich der Deckelteilfuge 38 des Reaktordruckbehälters 6 erstreckt und von den Hauptkühlmittelstutzen 48 durchdrungen ist. Letztere sowie auch die daran anschließenden Hauptkühlmittelleitungen HL sind, wie erwähnt, von weiteren Dämmpartien W5 umgeben. Die Wärmedämmung W wird bevorzugt aus Ganzmetallkassetten aufgebaut. Diese bestehen aus austenitischem, also korrosionsfestem, Stahl. Entsprechende Haltegerüste in Leichtbauweise zur Halterung dieser einzelnen zu einem geschlossenen Wärmedämmantel aneinanderreihbaren Kassetten sind nicht dargestellt.

Das äußere Kühlsytem 29 des Auffangbehälters 19 ist als ein duales Luft- und Wasser-Kühlsystem ausgebildet, welches im Normalbetrieb der Kernreaktor-Anlage KA, d.h. bei trockenem äußerem Kühlsystem 29, der Luftkühlung des Kernreaktordruckbehälters 6 dient bzw. der Luftkühlung der Außenflächen der Wärmedämmung W im allgemeinen und der einzelnen Dämmpartien W1 bis W3 sowie W5 im besonderen. Zu diesem Zweck ist die Einlaßkanalanordnung 31 an wenigstens eine Kühlluftquelle angeschlossen. Diese ist in Figuren 2 und 3 schematisch als ein Kühlluftgebläse 49 angedeutet. Es handelt sich um eine Mehrzahl von Gebläsen, die gemäß Pfeil f2 die Kühlluft in die Einlaßkanalanordnung 31 im Bereich der Pumpensumpfkammer 31c fördern. Figur 2 zeigt die einander überlagerten Kühlluftpfade der Kühlluft, siehe ausgezogene Strömungspfeile f2, und die Pfade des Kühlwassers, siehe gestrichelte Strömungspfeile f1. Bei einem hypothetischen Störfall geht die Luftkühlung im Kühlsystem 29 in eine Wasserkühlung des Auffangbehälters 19 nahtlos über, was noch erläutert wird. Die Auslaßkanalanordnung 32 mündet in das Containment und stellt damit eine Kühlluftsenke für die aus dem Kühlsystem 29 austretende Kühlluft dar, welche also zur mittelbaren Kühlung der Außenseite der unteren Dämmpartie W1 dient.

Mit dem aus Figur 2 erkennbaren dualen Kühlsystem gemäß Strömungspfeilen f1 und f2 überlagert ist ein weiteres Luftkühlsystem, dessen Strömungspfeile mit f21 bis f23 (vgl. Figuren 2 und 3) bezeichnet sind. Das erste Luftkühlsystem gemäß den Strömungspfeilen f2 ist als Ganzes mit ZL1 und das weitere Luftkühlsystem gemäß den Strömungspfeilen f21 bis f23 ist mit ZL2 bezeichnet. Zur Belüftung dieses weiteren Luftkühlsystems ZL2 (Figur 3) münden Eintrittskanäle 50, welche die Umfangswand 7.2 der Trag- und Schutzstruktur 7 und den Abschirmring 37 durchdringen, in einen oberen Kühlluftraum 45. Dieser erstreckt sich außerhalb der oberen Dämmpartie W3 bis zu einer Tragringstruktur 51 des Reaktordruckbehälters 6 und wird nach außen vom Innenumfang der Umfangswand 7.2 begrenzt. Die aufwärts strömende Kühlluft wird in mehreren Teilströmen an den folgenden Kühlflächen entlanggeführt: - Am Außenumfang der oberen Dämmpartie W3 und am Innenumfang der Umfangswand 7.2. Dabei stammt der Kühlluftstrom f22 aus den Eintrittskanälen 50. Letztere bestehen aus zwei Kanalteilen: dem Kanalteil 50a, welcher die Umfangswand 7.2 durchdringt und in Strömungsrichtung mit leichter Steigung verläuft, und dem unter einem Steigungswinkel von etwa 45° schräg nach oben den Abschirmring durchdringenden zweiten Kanalteil 50b. Die Kanalteile 50a, 50b bzw. der gesamte Eintrittskanal 50 können durch Mauerrohre 52 gebildet sein, vgl. Figur 4. Im Mündungsbereich der Eintrittskanäle 50 ist der Abschirmring 37 mit einer Abschrägung 37a versehen, wobei ein Strömungsleitblech 53 die Mündungsstelle des Eintrittskanals 50 jeweils überdeckt und die Kühlluft über nicht näher dargestellte Austrittsöffnungen über den Querschnitt des Kühlluftraums 45 verteilt austreten läßt; - der Kühlluftstrom f21 stammt vom ersten Luftkühlsystem ZL1; er wird am Innenumfang der Umfangswand 7.2 nach oben geführt und bildet einen über den Umfang des biologischen Schildes verteilten Kühlluftschleier, welcher sich oberhalb des Kühlluftraums 45 mit den Kühlluftströmen f22 vereinigt und als Kühlluftstrom f23 (siehe auch Figur 2) an den Außenflächen der Tragringstruktur 51 vorbeistreicht, insbesondere an den Tragarmen 51a, welche die Tragpratzen 54 des Reaktordruckbehälters abstützen und am Auflager 55 der Tragringstruktur 51; - ferner gemäß Figur 2 druch Austrittsringkanäle 7.4 hindurch (Kühlluftströme f23), wobei diese Austrittsringkanäle zwischen dem Außenumfang der Hauptkühlmittelleitungen HL und dem Innenumfang von Wanddurchbrechungen 7.3 der Trag- und Schutzstruktur 7 gebildet werden. Von hier gelangt die Kühlluft in das Containment bzw. das Innere des Sicherheitsbehälters 1 und von da in die (nicht dargestellte) Abluft-Filteranlage.

In das System der Luftkühlung ZL1 und ZL2 und des äußeren Kühlsystems 29 für die Wasserkühlung fügt sich eine zusätzliche Wasserkühlung für die Oberfläche einer eventuellen Kernschmelze, die sich im Auffangbehälter 19 befindet, mit wenigstens einem Schmelzkühlrohr 56 zweckentsprechend ein (Figur 2). Hierzu ist der Auffangbehälter 19 in der oberen Hälfte seiner Mantelwand 21 von wenigstens einem Schmelzkühlrohr 56 durchdrungen, welches in der dargestellten Mehrschichtstruktur des Auffangbehälters 19 durch dessen Tiegelwand 19a, Schutzschicht 19b, Opfermaterial-Depot 19c und durch die untere Wärmedämmlage W1 hindurchragt. An seinem inneren Ende ist dieses Schmelzkühlrohr 56 mittels Schmelzstopfens 56a abgedichtet. Es ist, wie dargestellt, von außen nach innen mit leichtem Gefälle (z.B. Neigungswinkel von 20 °) verlegt sowie einlaufseitig an einen Kühlflüssigkeitsspeicher angeschlossen, der mit dem Kühlwasserreservoir 24 (Figur 1) identisch sein kann. Bei im Auffangbehälter 19 vorhandener Kernschmelze wird der Schmelzstopfen 56a auf seine Schmelztemperatur aufgeheizt (die Schmelztemperatur liegt oberhalb der im Kammerraum 39 herrschenden Temperatur, aber noch weit unterhalb der Schmelztemperatur der Kernschmelze, z.B. bei 600° C). Der zum Schmelzen gebrachte Schmelzstopfen 56a gibt somit einen Strömungsweg für die Kühlflüssigkeit zur Oberfläche der hypothetischen Kernschmelze frei, so daß diese durch einen Wasserfilm nach oben zusätzlich abgeschirmt und gekühlt wird, wobei das ausdampfende Kühlmedium, insbesondere Wasserdampf, nach oben durch die für die Luftkühlung vorgesehenen Kühlkanäle entweichen kann. Das Einlaßende 56.1 des Schmelzkühlrohres 56 befindet sich außerhalb der Umfangswand 7.2; es kann mit dem im rechten Teil der Figur 2 oder der Figur 1 dargestellten gesonderten Steigrohr 30 verbunden sein, so daß, wenn über das normale Steigrohr 30 bei steigendem Pegel das Kühlwasser in die Einlaßkanäle 31 und damit in das Kühlsystem 29 eindringt, auch das Schmelzkühlrohr 56 entsprechend mit Kühlwasser versorgt wird. Deshalb ist die dargestellte Ausführung besonders günstig, bei der der Einlaß 56.1 des Schmelzkühlrohrs 56 auβerhalb der Trag- und Schutzstruktur 7 sich befindet und das Schmelzkühlrohr 56 demgemäß die Umfangswand 7.2 der Trag- und Schutzstruktur 7 sowie den Abstandszwischenraum 28 des äußeren Kühlsystems 29 durchdringt.

Die Anker 57 dienen zur Verankerung des Liners 22 und der gesamten Trag- und Schutzstruktur 7 in der Betonstruktur 4. Die Anker 57 verbinden die Trag- und Schutzstruktur 7 mit der Betonstruktur 4 an einer so großen Zahl von Verankerungsstellen, daß alle Kräfte und Momente sicher beherrscht werden, die vom Reaktordruckbehälter 6 über seinen Tragring 51 (Figur 3) auf die Trag- und Schutzstruktur 7 ausgeübt werden und umgekehrt (es sind lediglich zwei Verankerungsstellen gezeigt). Außer den Gewichtskräften kann es sich dabei z.B. um Abhebekräfte, Tangentialkräfte, Kippmomente oder laterale Kräfte handeln, die im Erdbeben- oder Auslegungsstörfall auftreten können. Zum schnelleren Abbau eines Überdrucks, der sich bei Dampf- und Gasentwicklung im Auffangbehälter 19 aufbauen könnte, kann es zweckmäßig sein, den Abschirmring 37 mit zusätzlichen Entlastungsöffnungen bzw. Überströmöffnungen zu versehen (nicht dargestellt). Weiterhin empfiehlt es sich, die Wärmedämmung W bzw. W1 bis W3 außen auf einem relativ dünnwandigen Isolier-Tragbehälter aus nicht-rostendem Stahl zu befestigen und diesen Isolier-Tragbehälter an den Tragarmen 51a des Tragrings 51 mittels geeigneter Vorsprünge oder Ringflansche aufzuhängen und zu fixieren. Auf diese Weise ist auch für die Wärmedämmung W eine besonders erdbebenfeste und störfallsichere Halterung gewährleistet. Ein solcher (nicht dargestellter) Isolier-Tragbehälter wird zweckmäßigerweise mit einer oder mehreren Inspektionsöffnungen versehen, die durch Deckel abschließbar sind, wodurch die Montage des Isolier-Tragbehälters erleichtert ist.

Der Tragring bzw. die Tragringstruktur 51 ist über Spannelemente 66 für den Liner 22 an diesen und damit zusätzlich an die Umfangswand 7.2 angeschlossen. Die Tragringstruktur 51 läßt sich aus geschmiedeten Ringsegmenten zusammenschweißen (oder zusammenschrauben) mit einer hinreichenden Anzahl von kräftigen Tragpratzensegementen, z.B. acht, an welche die Tragarme 51a angeformt sind. Weitere Anker sind für die Stahldichthaut 3 des Sicherheitsbehälters 1 vorgesehen (nicht dargestellt). Mit der Verankerung 58 wird eine Grundplatte 59 an der Kanalbodenfläche 4.2 fixiert, welche die Turbulenzkörper 34a trägt und an welcher weitere Strömungsleitkörper 60 befestigt sind.

Figur 3 zeigt im oberen Bereich einen sogenannten Deckenkompensator 61 zwischen der Betonstruktur der Umfangswand 7.2 und dem Tragring 51. Letzerer ist nach oben durch ein oberes Gegenlager 62 fixiert, und zwar gegen die Decke 63a einer ringförmigen Aussparung 63 in der Umfangswand 7.2. Mit 64 ist ein Verschlußstopfen für eine Wiederholungsprüföffnung 64a in der Tragringstruktur 51 bezeichnet.

Wie erwähnt, kann mit der Erfindung ein Verfahren zum Ingangsetzen und Aufrechterhalten einer äußeren Notkühlung des Auffangbehälters 19 bei der Kernreaktor-Anlage KA verwirklicht werden. Die einzelnen Verfahrensschritte sind (vgl. Fig. 1 u. 2) wie folgt:
- Bei Normalbetrieb der Kernreaktor-Anlage KA wird der Kühlwasserpegel des Kühlwasserreservoirs 24 auf einem Niedrigwasserstand P1 gehalten, bei dem in die Einlaßkanal-Anordnung 31 des Auffangbehälter-Kühlsystems 29 kein Kühlwasser gelangen kann, wohl aber Kühlluft gemäß den Strömungspfeilen f2, wie bereits erläutert.
- Für den weiteren Verfahrensablauf sei angenommen, daß ein auslegungsüberschreitendes Ereignis bevorsteht oder schon eingetreten ist. Ein solches Ereignis kann z.B. aus einem LOCA entstehen, der im folgenden zunächst erläutert wird. Bei einem LOCA (loss of coolant accident) wird postuliert, daß ein Riß in einer der Hauptkühlmittelleitungen HL oder ein Abriß einer solchen Leitung erfolgt ist. Bei Auftreten eines solchen Lecks im Primärkreis wird Notkühlwasser vom primärkreisdruck-abhängig aktivierbaren Druckspeichern in die Hauptkühlmittelleitungen HL des Reaktordruckbehälters 6 eingespeist, wie z.B. in der DE-PS 23 57 893 erläutert ist. Dies geschieht dadurch, daß Rückschlagventile auf den Druckabfall im Primärsystem ansprechen (normalerweise ist der Druck in den Druckspeichern niedriger als im Primärsystem). Findet dieser Druckabfall aufgrund des Lecks statt, so öffnen die Rückschlagventile, und die Druckspeicher können ihren Inhalt in die Hauptkühlmittelleitungen HL, sowohl auf der kalten als auch auf der heißen Seite, einspeisen. Dadurch wird der Reaktorkern 10 mit Notkühlwasser in ausreichendem Maße versorgt. Aus der Leckstelle tritt nun Notkühlwasser in den Reaktorsumpf bzw. in das Kühlwasserreservoir 24 über, dessen Pegel infolgedessen langsam steigt. In diesem Notkühlfall eines LOCA sind naturgemäß alle Steuerstäbe in den Kern eigefahren worden ("scram"), d.h. der normale Leistungsbetrieb des Kernreaktors ist abgeschaltet, und es entsteht im Kern 10 noch die sogenannte Nachzerfallswärme, die etwa 5 % der Nennleistung des Kernreaktors ausmacht. Wenn nun das Notkühlsystem befriedigend funktioniert, können nach einer gewissen Zeit der Primärkreis und der Sekundärkreis der Kernreaktor-Anlage so weit heruntergekühlt werden, daß eine Reparatur an der gerissenen oder beschädigten Hauptkühlmittelleitung möglich ist. Das in den (nicht dargestellten) Druckspeichern vorhandene Wasservolumen reicht nun aus, den Kühlwasserpegel des Kühlwasserreservoirs 24 bis zu einem Hochwasserstand P2 (gestrichelt angedeutet) anzuheben. Ist dieser Hochwasserstand P2 erreicht, so wird durch das Steigrohr 30 (es können mehrere solcher Steigrohre 30 über den Umfang der Trennwand 27 verteilt angeordnet sein) Kühlwasser in die Einlaufkammer 35 gefördert, und von dieser Einlaufkammer fließt das Kühlwasser über die Einlaßkanäle 31b, 31a zur Einlaßkammer 33 und von hier in das äußere Kühlsystem 29. Nach dem Prinzip der kommunizierenden Röhren füllt sich das äußere Kühlsystem mit Kühlwasser; es findet jedoch noch kein Naturumlauf statt, weil die Wärmeeinwirkung durch eine Kernschmelze auf den Auffangbehälter 19 fehlt. Wenn im Steigrohr 30 (das man auch als Syphon bezeichnen kann) das Wasser steigt, so öffnet die Rückschlagklappe 65. Sollte der Pegelstand P2 auf einen Pegelstand P1 oder noch tiefer fallen, so würde nach dem Syphonprinzip trotzdem durch das Steigrohr 30 Kühlwasser in die Einlaufkammer 35 gefördert werden, weil ja das Rückschlagventil 65 geschlossen hat. Das äußere Kühlsystem 29 ist durch den beschriebenen Funktionsablauf prophylaktisch mit Kühlwasser gefüllt. Sollte nun das Notkühlsystem, welches dem Reaktordruckbehälter über dessen Hauptkühlmittelleitungen HL Notkühlwasser zuführt, aus irgendwelchen Gründen versagen, so daß der Wasserstand im Reaktordruckbehälter 6 zu sinken beginnt, schließlich der Kern 10 (Figur 1) nicht mehr von Kühlwasser bedeckt ist und auch das restliche Kühlwasser aus dem Reaktordruckbehälter 6 ausdampft, ohne daß ein Nachschub möglich ist, so tritt der hypothetische Störfall der Kernschmelze auf. Für diesen Störfall ist nun der Auffangbehälter 19 mit seinem äußeren Kühlsystem, wie beschrieben eigensicher ohne irgendwelche Steuerbefehle, gerüstet, d.h. Kernschmelze, die nach dem Aufschmelzen der Bodenkalotte 6.1 durch diese nun in den Auffangbehälter 19 zunächst tropfen und dann fließen würde, würde sich mit dem Opfermaterial-Depot 19c vermischen (nachdem sie die Wärmedämmung W1 durchschmolzen hat) und sich innerhalb des Auffangbehälters 19 verteilen. Der Wärmefluß würde den Tiegel 19a entsprechend aufheizen und damit das in den äußeren Kühlkanälen 29.1, 29.2 enthaltene (noch stehende) Kühlwasser. Durch den Wärmeeintrag in diese Kühlwassersäule würde sich nun ein Naturumlauf entwickeln können, d.h. das aufgewärmte Kühlwasser steigt gemäß den Strömungspfeilen fl nach oben und verläßt das Kühlsystem 29 über die Auslaßkanalanordnung 32. Ein Teil des Kühlwassers verdampft und wird an innerhalb des Containments angeordneten Rückkühlern oder an Containmentwänden kondensiert. Das Kondensat tropft oder fließt zurück in das Kühlwasserreservoir 24 und steht damit für den Kreislauf bzw. die Naturumlaufkühlung wieder zur Verfügung. Wenn eine gewisse Menge Kernschmelze in den Auffangbehälter 19 eingedrungen ist, ist die Strahlungswärme so groß, daß auch der Schmelzstopfen 56a wegschmilzt. Dann kann über das Schmelzkühlrohr 56 Kühlwasser zur Oberfläche der Kernschmelze einströmen und diese auch von oben kühlen. Die Kernschmelze wird damit intensiv von unten über den Tiegel 19a und von oben durch den Kühlwasser film gekühlt; da das Schutzmaterial 19b sich ebenfalls mit der Kernschmelze verbindet und mit dieser eine Legierung bildet, deren Schmelzpunkt vorzugsweise erniedrigt ist, so daß ein Verflüssigungseffekt auf die Schmelze ausgeübt wird, so wird auch dadurch die Wärmeabfuhr von der Kernschmelze und ihre interne Rollzellen-Strömung begünstigt. Da das Kühlwasser in ausreichenden Mengen zur Verfügung steht, wird nach einer gewissen Zeit, die mehrere Tage betragen kann, die Kernschmelze zur Erstarrung gebracht. Nach Erstarrung vergeht noch einige Zeit bis die Kernschmelze restlos abgekühlt ist, und in diesem Zustand kann mit der Wiederherstellung der Kernreaktor-Anlage begonnen werden. Dazu ist es erforderlich, die Kernreaktor-Anlage zu dekontaminieren und den beschädigten Kernreaktordruckbehälter 6 zusammen mit dem Auffangbehälter 19, der die erstarrte Kernschmelze enthält, auszuwechseln gegen entsprechende neue Komponenten.

## Patentansprüche

1. Kernreaktor-Anlage, insbesondere Leichtwasserreaktor-Anlage mit einem Reaktordruckbehälter (6) mit Reaktorkern (10) und einer Kernrückhaltevorrichtung (CC),
dadurch gekennzeichnet daß
a) unterhalb des Reaktordruckbehälters (6) ein mittels einer Kühlflüssigkeit kühlbarer Auffangbehälter (19) für die Kernschmelze so installiert ist, daß seine Bodenwand (20) und seine Mantelwand (21) einen Abstandszwischenraum (28) zum Bodenbereich (7.1) bzw. zur Umfangswand (7.2) einer den Reaktordruckbehälter (6) tragenden sowie unten und seitlich umgebenden Trag- und Schutzstruktur (7) aufweisen, und daß
b) im Abstandszwischenraum (28) bodenseitige und mantelseitige Kühlkanäle (29.1, 29.2) zur Außenkühlung des Auffangbehälters (19) mit einer Kühlflüssigkeit sowie -im Flächenbereich der Bodenwand (20) - Turbulenzkörper (34, 34a, 34d) zur Erzeugung einer von innen nach außen über die Bodenwand (20) zur Mantelwand (21) flieβenden Turbulenzströmung der Kühlflüssigkeit angeordnet sind.

2. Kernreaktor-Anlage nach Anspruch 1,
**dadurch gekennzeichnet**, daß die bodenseitigen Kühlkanäle (29.1) über eine Einlaßkanalanordnung (31) und die mantelseitigen Kühlkanäle (29.2) über eine Auslaßkanalanordnung (32) an ein außerhalb der Trag- und Schutzstruktur (7) vorgesehenes, einen Reaktorgebäudesumpf bildendes oder mit diesem verbundenes Kühlwasserreservoir (24) mit einer solchen Steighöhe angeschlossen sind, daß bei heißem Auffangbehälter (19) und wassergefüllten Kühlkanälen (29.1, 29.2) eine Naturumlaufströmung durch die Kühlkanäle hindurch angefacht wird.

3. Kernreaktor-Anlage nach Anspruch 1 oder 2, wobei die Trag- und Schutzstruktur (7) mit einem Bodenbereich (7.1) und einer Umfangswand (7.2) eine Reaktorkaverne (8) begrenzt, und der mit vertikalem und lateralem Abstand zu Bodenbereich bzw. Umfangswand (7.1, 7.2) in der Reaktorkaverne (8) angeordnete Reaktordruckbehälter (6) an der Trag- und Schutzstruktur (7) gelagert ist,
**dadurch gekennzeichnet**, daß der Auffangbehälter (19) mit einer solchen Höhe seiner Mantelwand (21) angeordnet ist, daß sich diese wenigstens bis etwa zur Unterkante des Reaktorkerns (10) erstreckt.

4. Kernreaktor-Anlage nach einem der Ansprüche 1 bis 3,
**dadurch gekennzeichnet**, daß der Auffangbehälter (19) auf dem Bodenbereich (7.1) der Trag-und Schutzstruktur (7) mittels der Turbulenzkörper (34, 34a) und/oder gesonderter Abstützkörper aufgelagert ist.

5. Kernreaktor-Anlage nach einem der Ansprüche 1 bis 4,
**dadurch gekennzeichnet**, daß der Auffangbehälter (19) tiegelartig ausgebildet und hierzu seine Bodenwand (20) nach unten bzw. außen ausgewölbt ist und über einen abgerundeten Kantenbereich (19.1) in die Mantelwand (21) übergeht und daß die Mantelwand (21) vom abgerundeten Kantenbereich (19.1) bis zum oberen Rand (21.1) des Auffangbehälters (19) schwach konisch verjüngt ist.

6. Kernreaktor-Anlage nach Anspruch 5,
**dadurch gekennzeichnet**, daß die Bodenwand (20) des Auffangbehälters (19) sich von einem tiefsten Zentralbereich (19.0) bis zum Kantenbereich (19.1) in Form eines flachen Kegelmantels erweitert, dessen in axial- radialen Schnittebenen liegende Schnittflächen mit einem kleinen Steigungswinkel (α) zur Horizontalen verlaufen.

7. Kernreaktor-Anlage nach Anspruch 2,
**dadurch gekennzeichnet**, daß die Einlaßkanalanordnung (31) in die bodenseitigen Kühlkanäle (29.1) im Zentralbereich (19.0) der Bodenwand (20) des Auffangbehälters (19) über eine Einlaßkammer (33) mündet, daß von der Einlaβkammer (33) die bodenseitigen Kühlkanäle (29.1) sich nach außen bis zum Kantenbereich (19.1) des Auffangbehälters (19) erstrecken und daß sich an den Kantenbereich (19.1) ein mantelseitiger, nach oben verlaufender Kühlkanal (29.2) anschließt, welcher in eine Auslaßkanalanordnung (32) mündet.

8. Kernrekator-Anlage nach Anspruch 7,
**dadurch gekennzeichnet**, daß die Einlaßkanalanordnung (31) den Bodenbereich (7.1) der Trag-und Schutzstruktur (7) durchdringt und von einer das Kühlwasserreservoir (24) aufnehmenden Kammer (23) bis zum Zentralbereich (19.0) der Bodenwand (20) des Auffangbehälters (19) sich erstreckt-und daß die Auslaßkanalanordnung (32) die Umfangswand (7.2) der Trag- und Schutzstruktur (7) durchdringt, eine Fortsetzung des mantelseitigen Kühlkanals (29.2) bildet und in das Kühlwasserreservoir (24) in dessen oberem Pegelbereich (P2) mündet.

9. Kernreaktor-Anlage nach einem der Ansprüche 1 bis 8,
**dadurch gekennzeichnet**, daß der Grundkörper (19a) des Auffangbehälters (19) von einem Tiegel, bestehend aus einer temperaturbeständigen Stahllegierung, gebildet ist, daß die inneren Boden- und Mantelflächen (20, 21) des Tiegels (19a) mit einem Schutzmantel (19b) ausgekleidet sind, welcher dem Schutz des Tiegelmaterials gegen Schmelzangriff dient, und daß als zweite Schutzschicht für den Tiegel auf den Schutzmantel (19b) ein Opfermaterial-Depot (19c) folgt, dessen Menge zur Reaktion mit dem maximal möglichen Kernschmelzvolumen, welches bei ein eventuellen Störfall in den Auffangbehälter (19) eindringen würde, ausreicht.

10. Kernreaktor-Anlage nach Anspruch 9,
**dadurch gekennzeichnet**, daß der Schutzmantel (19b) aus einer der folgenden Legierungen, einzeln oder in Kombination, besteht: MgO, UO₂ oder ThO₂.

11. Kernreaktor-Anlage nach Anspruch 9,
**dadurch gekennzeichnet**, daß das Opfermaterial-Depot (19c) als ein Mauerwerk aus Abschirmbetonsteinen (36) ausgebildet ist.

12. Kernreaktor-Anlage nach Anspruch 1,
**dadurch gekennzeichnet**, daß die Turbulenzkörper (34, 34a) sogenannte Deltaflügel (34d) in Gestalt von Prismen mit dreiseitigen Flächen (F1-F4) umfassen, welche an dem der Auffangbehälter-Bodenwand (20) mit Kühlspalt gegenüberliegenden Bodenbereich (7.1) der Trag- und Schutzstruktur (7) befestigt sind.

13. Kernreaktor-Anlage nach Anspruch 1 oder 4,
**dadurch gekennzeichnet**, daß die Turbulenzkörper (34, 34a) als Rohrstutzen (34r) ausgebildet sind und die Rohrstutzen (34r) an ihren der Bodenwand (20) des Auffangbehälters (19) zugewandten Enden mit Kanalaussparungen (41) zur Erzeugung von Kühlwasserteilströmen (f11) versehen sind, so daß letztere die Bodenwand (20) auch im Rohrstutzenbereich umspülen.

14. Kernreaktor-Anlage nach Anspruch 13,
**dadurch gekennzeichnet**, daß pro Rohrstutzen (34r) jeweils zwei in Strömungsrichtung fluchtende U-förmige Kanalaussparungen (41) vorgesehen sind, deren Begrenzungen zur Turbulenzvergrößerung kantig (41.1) ausgeführt sind.

15. Kernreaktor-Anlage nach einem der Ansprüche 1 bis 14,
**gekennzeichnet durch** einen Abschirmring (37), der oberhalb des Auffangbehälters (19) und an diesen anschließend im Ringraum (45) zwischen der Umfangswand (7.2) der Trag- und Schutzstruktur (7) und dem Außenumfang des Reaktordruckbehälters (6) installiert ist.

16. Kernreaktor-Anlage nach Anspruch 15,
**dadurch gekennzeichnet**, daß der Abschirmring (37) an der Umfangswand (7.2) der Trag- und Schutzstruktur (7) verankert ist.

17. Kernreaktor-Anlage nach Anspruch 15 oder 16,
**dadurch gekennzeichnet**, daß der Abschirmring (37) aus Spannbeton besteht und seine Stahlarmierung mit der Stahlarmierung der ebenfalls aus Spannbeton bestehenden Trag- und Schutzstruktur (7) zu einem einheitlichen Stahlarmierungssystem vereinigt ist.

18. Kernreaktor-Anlage nach einem der Ansprüche 15 bis 17,
**dadurch gekennzeichnet**, daß eine den Unterteil (6a) des Reaktordruckbehälters (6) mit Abstand umgebende Wärmedämmung (W) vorgesehen ist, welche im wesentlichen in drei ineinander übergehende Dämmpartien (W1-W3) untergliedert ist:
a) eine untere Dämmpartie (W1), welche die Opferschicht (19c) des Auffangbehälters (19) auskleidet und die Bodenkalotte (6.1) des Reaktordruckbehälters (6) umgibt,
b) eine mittlere Dämmpartie (W2), welche den Innenumfang des Abschirmrings (37) auskleidet, und
c) eine obere Dämmpartie (W3), welche sich vom Abschirmring (37) bis zum Bereich der Deckelteilfuge (38) des Reaktordruckbehälters (6) erstreckt und von den Hauptkühlmittelstutzen durchdrungen ist.

19. Kernreaktor-Anlage nach einem der Ansprüche 2 bis 18,
**dadurch gekennzeichnet**, daß ein äußeres Kühlsystem (29) des Auffangbehälters (19) als ein duales Luft- und Wasser-Kühlsystem ausgebildet ist, welches im Normalbetrieb der Kernreaktor-Anlage (KA), d.h. bei trockenem äußerem Kühlsystem, der Luftkühlung des Kernreaktor- Druckbehälters (6) bzw. der Außenseite einer diesen umgebenden Wärmedämmung (W) dient, zu welchem Zweck die Einlaßkanalanordnung (31) an eine Kühlluftquelle (49) und die Auslaßkanalanordnung (32) an eine Kühlluftsenke angeschlossen sind.

20. Kernreaktor-Anlage nach Anspruch 19,
**dadurch gekennzeichnet**, daß zusätzlich zum äußeren dualen Kühlsystem (29, ZL1) ein weiteres Luftkühlsystem (ZL2) für den Reaktordruckbehälter (6) vorgesehen ist, daß zur Belüftung dieses weiteren Luftkühlsystems (ZL2) Eintrittskanäle (50), welche die Umfangswand (7.2) der Trag- und Schutzstruktur (7) und den Abschirmring (37) durchdringen, in einen oberen Kühlluftraum (45) münden, und daß sich dieser obere Kühlluftraum (45) außerhalb der oberen Dämmpartie (W3) bis zu einer Tragringstruktur (51) des Reaktordruckbehälters (6) erstreckt, wobei die aufwärts strömende Kühlluft in mehreren Teilströmen an den folgenden Kühlflächen entlangführbar ist:
- am Außenumfang der oberen Dämmpartie (W3) und am Innenumfang der Umfangswand (7.2) der Trag- und Schutzstruktur (7),
- an den Außenflächen der Tragringstruktur (51), insbesondere an ihren die Tragpratzen (54) des Reaktordruckbehälters (6) abstützenden Tragarmen (51a) und an ihrem eigenen Auflager (55),
- und durch Austrittsringkanäle (7.4) hindurch, die zwischen dem Außenumfang der Hauptkühlmittelleitungen (HL) und dem Innenumfang von Wanddurchbrechungen (7.3) der Trag- und Schutzstruktur (7) gebildet werden, ins Containment bzw. in die Abluft-Filteranlage.

21. Kernreaktor-Anlage nach einem der Ansprüche 1 bis 20,
**dadurch gekennzeichnet**, daß der Auffangbehälter (19) in der oberen Hälfte seiner Mantelwand (21) von wenigstens einem Schmelzkühlrohr (56) durchdrungen ist, welches bei einer Mehrschichtstruktur des Auffangbehälters (19) durch dessen Tiegelwand (19a), Schutzschicht (19b), Opfermaterial-Depot (19c) und Wärmedämmung (W1) hindurchragt, an seinem inneren Ende mittels Schmelzstopfen (56a) abgedichtet und von außen nach innen mit Gefälle verlegt sowie einlaufseitig an einen Kühlflüssigkeitsspeicher (24) angeschlossen ist, so daß bei im Auffangbehälter (19) vorhandener Kernschmelze der Schmelzstopfen (56a) auf seine Schmelztemperatur aufgeheizt und zum Schmelzen gebracht und somit ein Strömungsweg für die Kühlflüssigkeit zur Oberfläche der Kernschmelze freigegeben wird.

22. Verfahren zum Ingangsetzen und Aufrechterhalten einer Außenkühlung der Kernrückhaltevorrichtung bei einer Kernreaktor-Anlage nach einem der Ansprüche 2 bis 21,
**dadurch gekennzeichnet**,
- daß bei Normalbetrieb der Kernreaktor-Anlage der Kühlwasserpegel des Kühlwasserreservoirs (24) auf einem Niedrigwasserstand gehalten wird, bei dem in die EinlaßkanalAnordnung (31) des Auffangbehälter-Kühlsystems (29) kein Kühlwasser gelangen kann,
- daß bei Auftreten eines Lecks im Primärkreis Notkühlwasser von primärkreisdruck-abhängig aktivierbaren Druckspeichern in die Hauptkühlmittelleitungen (HL) des Reaktordruckbehälters (6) eingespeist wird, wobei dieses Notkühlwasser über die Leckstelle und gegebenenfalls parallel dazu über weitere Einspeisestellen in das Kühlwasserreservoir (24) eingespeist wird und wobei das Wasservolumen der Druckspeicher ausreicht, den Kühlwasserpegel des Kühlwasserreservoirs (24) bis zu einem Hochwasserstand (P2) anzuheben, bei welchem Kühlwasser vom Kühlwasserreservoir (24) in die Einlaßkanal-Anordnung (31) und von dort in den Abstandszwischenraum (28) des Auffangbehälter-Kühlsystems (29) gelangen und das Kühlsystem bis zum Niveau einer Auslaßkanal-Anordnung (32) auffüllen kann, so daß bei heißem Auffangbehälter (19) eine Naturumlaufströmung vom Kühlwasserreservoir (24) über die Einlaβkanal-Anordnung (31) zu den boden- und mantelseitigen Kühlkanälen (29.1,29.2) des Kühlsystems (29) und von dort über die AuslaßkanalAnordnung (32) zurück zum Kühlwasserreservoir (24) in Gang gesetzt wird.

## Claims

1. Nuclear reactor installation, in particular a light water reactor installation with a reactor pressure vessel (6) with a reactor core (10) and a core containment device (CC), characterized in that
a) underneath the reactor pressure vessel (6) a collecting vessel (19) coolable by means of a cooling liquid for the core melt is installed such that its bottom wall (20) and jacket wall (21) have a spacing gap (28) in relation to the bottom region (7.1) or circumferential wall (7.2) of a supporting and protective structure (7) enclosing the reactor pressure vessel (6) underneath and laterally, and that
b) disposed in the spacing gap (28) are cooling channels (29.1, 29.2) on the bottom and jacket side for exterior cooling of the collecting vessel (19) with a cooling liquid and, in the surface area of the bottom wall (20), turbulence bodies (34, 34a, 34d) for generating a turbulent flow of the cooling liquid flowing from inside to outside via the bottom wall (20) to the jacket wall (21).

2. Nuclear reactor installation according to claim 1, characterized in that the cooling channels (29.1) on the bottom side are connected via an inlet channel arrangement (31) and the cooling channels (29.2) on the jacket side connected via an outlet channel arrangement (32) to a cooling reservoir (24), which is provided outside the supporting and protective structure (7) and forms a reactor building sump or is connected thereto, at such a lifting height that with a hot collecting vessel (19) and water-filled cooling channels (29.1, 29.2) a naturally circulating flow through the cooling channels is initiated.

3. Nuclear reactor installation according to claim 1 or 2, the supporting and protective structure (7) delimiting with a bottom region (7.1) and a circumferential wall (7.2) a reactor cavern (8) and the reactor pressure vessel (6) disposed in the reactor cavern (8) at a vertical and lateral distance from the bottom region or circumferential wall (7.1, 7.2) being carried on the supporting and protective structure (7), characterized in that the collecting vessel (19) is disposed with such a height of its jacket wall (21) that this extends at least as far as approximately the lower edge of the reactor core (10).

4. Nuclear reactor installation according to any one of claims 1 to 3, characterized in that the collecting vessel (19) is borne on the bottom region (7.1) of the supporting and protective structure (7) by means of the turbulence bodies (34, 34a) and/or separate support bodies.

5. Nuclear reactor installation according to any one of claims 1 to 4, characterized in that the collecting vessel (19) is formed in the shape of a crucible and for this purpose its bottom wall (20) is curved downwards or outwards and merges via a rounded edge region (19.1) into the jacket wall (21), and that the jacket wall (21) is tapered slightly conically from the rounded edge region (19.1) as far as the upper edge (21.1) of the collecting vessel (19).

6. Nuclear reactor installation according to claim 5, characterized in that the bottom wall (20) of the collecting vessel (19) extends from a deepest central area (19.0) as far as the edge region (19.1) in the form of a flat envelope of a cone, the sectional areas of which lying in axial-radial sectional planes run at a slight angle of inclination (α) to the horizontal.

7. Nuclear reactor installation according to claim 2, characterized in that the inlet channel arrangement (31) discharges into the cooling channels (29.1) on the bottom side in the central area (19.0) of the bottom wall (20) of the collecting vessel (19) via an inlet chamber (33), that from the inlet chamber (33) the cooling channels (29.1) on the bottom side extend outwards as far as the edge region (19.1) of the collecting vessel (19) and that adjoining the edge region (19.1) is a cooling channel (29.2) on the jacket side running upwards, which discharges into an outlet channel arrangement (32).

8. Nuclear reactor installation according to claim 7, characterized in that the inlet channel arrangement (31) penetrates the bottom region (7.1) of the supporting and protective structure (7) and extends from a chamber (23) containing the cooling water reservoir (24) to the central area (19.0) of the bottom wall (20) of the collecting vessel (19) and that the outlet channel arrangement (32) penetrates the circumferential wall (7.2) of the supporting and protective structure (7), forms a continuation of the cooling channel (29.2) on the jacket side and discharges into the cooling water reservoir (24) in its upper level area (P2).

9. Nuclear reactor installation according to any one of claims 1 to 8, characterized in that the base body (19a) of the collecting vessel (19) is formed by a crucible consisting of a temperature-resistant steel alloy, that the inner bottom and jacket surfaces (20, 21) of the crucible (19a) are lined with a protective shell (19b), which serves to protect the crucible material against melt attack, and that following the protective shell (19b) as a second protective layer for the crucible is a sacrificial material deposit (19c), the amount of which is adequate for reacting with the maximum possible core melt volume which would enter the collecting vessel (19) in a possible accident.

10. Nuclear reactor installation according to claim 9, characterized in that the protective shell (19b) consists of one of the following alloys, singly or in combination: MgO, UO₂ or ThO₂.

11. Nuclear reactor installation according to claim 9, characterized in that the sacrificial material deposit (19c) is formed as masonry of shielding concrete blocks (36).

12. Nuclear reactor installation according to claim 1, characterized in that the turbulence bodies (34, 34a) include so-called delta wings (34d) in the shape of prisms with triangular surfaces (F1 - F4), which are fastened on the bottom region (7.1) of the supporting and protective structure (7) opposing the collecting vessel bottom wall (20) with a cooling gap.

13. Nuclear reactor installation according to claim 1 or 4, characterized in that the turbulence bodies (34, 34a) are formed as pipe sockets (34r) and the pipe sockets (34r) are provided at their ends facing the bottom wall (20) of the collecting vessel (19) with channel recesses (41) for generating partial cooling water flows (f11), so that the latter wash the bottom wall (20) also in the area of the pipe sockets.

14. Nuclear reactor installation according to claim 13, characterized in that provided for each pipe socket (34r) are two U-shaped channel recesses (41) aligned in the direction of flow, the limitations of which are formed angular (41.1) to increase turbulence.

15. Nuclear reactor installation according to any one of claims 1 to 14, characterized by a shielding ring (37), which is installed above the collecting vessel (19) and adjoining this in the annular space (45) between the circumferential wall (7.2) of the supporting and protective structure (7) and the outer circumference of the reactor pressure vessel (6).

16. Nuclear reactor installation according to claim 15, characterized in that the shielding ring (37) is anchored on the circumferential wall (7.2) of the supporting and protective structure (7).

17. Nuclear reactor installation according to claim 15 or 16, characterized in that the shielding ring (37) consists of prestressed concrete and its steel reinforcement is combined with the steel reinforcement of the supporting and protective structure (7), which is likewise formed of prestressed concrete, to form a uniform steel reinforcement system.

18. Nuclear reactor installation according to any one of claims 15 to 17, characterized in that a thermal insulation (W) enclosing the lower part (6a) of the reactor pressure vessel (6) at a distance is provided, which insulation is essentially broken down into three insulating portions (W1 - W3) merging into one another:
a) a lower insulating portion (W1), which lines the sacrificial layer (19c) of the collecting vessel (19) and encloses the bottom cup (6.1) of the reactor pressure vessel (6),
b) a middle insulating portion (W2), which lines the inner circumference of the shielding ring (37), and
c) an upper insulating portion (W3), which extends from the shielding ring (37) as far as the area of the cover section joint (38) of the reactor pressure vessel (6) and is penetrated by the main coolant connection pieces.

19. Nuclear reactor installation according to any one of claims 2 to 18, characterized in that an outer cooling system (29) of the collecting vessel (19) is formed as a dual air and water cooling system, which in normal operation of the nuclear reactor installation (KA), i.e. when the outer cooling system is dry, is used for air cooling of the nuclear reactor pressure vessel (6) or the outside of a thermal insulation (W) enclosing this, for which purpose the inlet channel arrangement (31) is connected to a cooling air source (49) and the outlet channel arrangement (32) is connected to a cooling air sink.

20. Nuclear reactor installation according to claim 19, characterized in that, in addition to the outer dual cooling system (29, ZL1), a further air cooling system (ZL2) for the reactor pressure vessel (6) is provided, that to ventilate this further air cooling system (ZL2) inlet channels (50), which penetrate the circumferential wall (7.2) of the supporting and protective structure (7) and the shielding ring (37), discharge into an upper cooling air chamber (45), and that this upper cooling air chamber (45) extends outside the upper insulating portion (W3) as far as a support ring structure (51) of the reactor pressure vessel (6), the upwardly flowing cooling air being guidable in several partial flows along the following cooling surfaces:
- the outer circumference of the upper insulating portion (W3) and the inner circumference of the circumferential wall (7.2) of the supporting and protective structure (7),
- the exterior surfaces of the support ring structure (51), in particular its support arms (51a) supporting the support lugs (54) of the reactor pressure vessel (6) and its own seat (55),
- and through outlet ring channels (7.4), which are formed between the outer circumference of the main coolant lines (HL) and the inner circumference of wall openings (7.3) of the supporting and protective structure (7), into the containment or the exhaust air filter system.

21. Nuclear reactor installation according to any one of claims 1 to 20, characterized in that the collecting vessel (19) is penetrated in the upper half of its jacket wall (21) by at least one melt cooling tube (56), which protrudes in the case of a multilayer structure of the collecting vessel (19) through its crucible wall (19a), protective layer (19b), sacrificial material deposit (19c) and thermal insulation (W1), is sealed at its inner end by means of a melting plug (56a) and runs from outside to inside at a gradient and is connected on the intake side to a cooling liquid reservoir (24), so that when a core melt is present in the collecting vessel (19) the melting plug (56a) is heated to its melting temperature and caused to melt and thus a flow path for the cooling liquid to the surface of the core melt is released.

22. Method of initiating and maintaining an exterior cooling of the core containment device in a nuclear reactor installation according to any one of claims 2 to 21, characterized in that
- in normal operation of the nuclear reactor installation the cooling water level of the cooling water reservoir (24) is maintained at a low water level, at which no cooling water can enter the inlet channel arrangement (31) of the collecting vessel cooling system (29),
- that in the event of a leak occurring in the primary circuit, emergency cooling water is supplied from pressure reservoirs activatable depending on the primary circuit pressure to the main coolant lines (HL) of the reactor pressure vessel (6), this emergency cooling water being supplied via the leakage point and if necessary parallel to it via further supply points to the cooling water reservoir (24) and the water volume of the pressure reservoirs being sufficient to raise the cooling water level of the cooling water reservoir (24) to a high water level (P2), at which cooling water from the cooling water reservoir (24) enters the inlet channel arrangement (31) and from there the spacing gap (28) of the collecting vessel cooling system (29) and the cooling system being able to fill up to the level of an outlet channel arrangement (32), so that with a hot collecting vessel (19) a naturally circulating flow is initiated from the cooling water reservoir (24) via the inlet channel arrangement (31) to the cooling channels (29.1, 29.2) of the cooling system (29) on the bottom and jacket side and from there via the outlet channel arrangement (32) back to the cooling water reservoir (24).

## Revendications

1. Installation de réacteur nucléaire, notamment installation de réacteur à eau ordinaire, comportant une cuve (6) du réacteur sous pression comprenant un coeur (10) et un dispositif de supportage (CC) du coeur,
caractérisée par le fait que
a) une cuve réceptrice (19) pouvant être refroidie par un fluide de refroidissement est montée, pour la fusion du coeur, et est disposée au-dessous de la cuve (6) du réacteur sous pression de telle sorte qu'il existe une zone intermédiaire (28) entre sa paroi de fond (20) et sa paroi de surface latérale (21) et la zone de fond (7.1) ou la paroi circonférentielle (7.2) d'une structure (7) de support et de protection, qui supporte la cuve (6) du réacteur sous pression et l'entoure par le dessous et latéralement, et que
b) dans la zone intermédiaire (28), des canaux de refroidissement (29.1, 29.2), qui sont situés du côté du fond et du côté de la surface latérale, sont prévus pour le refroidissement extérieur de la cuve réceptrice (19) avec un fluide de refroidissement ainsi que - dans la zone de la surface de la paroi de fond (20) - des corps (34,34a,34d) produisant des turbulences et destinés à former un écoulement turbulent du fluide de refroidissement, qui circule de l'intérieur vers l'extérieur au-dessus de la paroi de fond (20) en direction de la paroi de surface latérale (21).

2. Installation de réacteur nucléaire suivant la revendication 1, caractérisée par le fait que les canaux de refroidissement (29.1) situés du côté du fond et les canaux de refroidissement (29.2) situés du côté de la surface latérale sont raccordés respectivement par l'intermédiaire d'un dispositif à canal d'admission (31) et par l'intermédiaire d'un dispositif à canaux de sortie (32) à un réservoir (24) d'eau de refroidissement, qui est prévu à l'extérieur de la structure (7) de support et de protection, et qui forme un puisard du réacteur ou est relié à ce dernier, avec une hauteur de levée telle que, dans le cas où la cuve réceptrice (19) est chaude et où les canaux de refroidissement (29.1, 29.2) sont remplis d'eau, un écoulement de circulation naturelle s'effectue par les canaux de refroidissement.

3. Installation de réacteur nucléaire suivant la revendication 1 ou 2, dans lequel la structure (7) de support et de protection limite une enceinte (8) du réacteur, par une zone de fond (7.1) et une paroi circonférentielle (7.2), et la cuve (6) du réacteur sous pression, montée dans l'enceinte (8) du réacteur en étant à distance verticalement et latéralement de la zone de fond ou de la paroi circonférentielle (7.1,7.2) est placée sur la structure (7) de support et de protection, caractérisée par le fait que la cuve réceptrice (19) est disposé avec sa paroi de surface latérale (21) à une hauteur telle que cette dernière s'étend au moins jusqu'à approximativement le bord inférieur du coeur (10) du réacteur.

4. Installation de réacteur nucléaire suivant l'une des revendications 1 à 3, caractérisé par le fait que la cuve réceptrice (19) est placée sur la partie de fond (7.1) de la structure (7) de support et de protection au moyen du corps (34,34a) produisant des turbulences et/ou d'un corps de support particulier.

5. Installation de réacteur nucléaire suivant l'une des revendications 1 à 4, caractérisée par le fait que la cuve réceptrice (19) est réalisé en forme de creuset et qu'à cet effet sa paroi de fond (20) est voutée vers le bas ou vers l'extérieur et devient, par l'intermédiaire d'une zone de bord arrondie (19.1) par la paroi de surface latérale (21) et que la paroi de surface latérale (21) se rétrécit avec une forme légèrement conique à partir de la zone de bord arrondie (19.1) jusqu'au bord supérieur (21.1) de la cuve réceptrice (19).

6. Installation de réacteur nucléaire suivant la revendication 5, caractérisée par le fait que la paroi de fond (20) de la cuve réceptrice (19) s'élargit à partir d'une zone centrale (19.0) la plus basse jusqu'à la zone de bord (19.1) sous la forme d'une enveloppe conique aplatie, dont les surfaces de coupe, qui sont situées dans des plans de coupe axiaux - radiaux, s'étendent selon un faible angle d'inclinaison (α) par rapport à l'horizontale.

7. Installation de réacteur nucléaire suivant la revendication 2, caractérisée par le fait que le dispositif (31) à canal d'entrée débouche dans les canaux de refroidissement (29.1) situés du côté du fond dans la zone centrale (19.0) de la paroi de fond (20) de la cuve réceptrice (19) par l'intermédiaire d'une chambre d'entrée (33), que les canaux de refroidissement (29.1) situés du côté du fond s'étendent vers l'extérieur à partir de la chambre d'entrée (33), jusqu'à la zone de bord (19.1) de la cuve réceptrice (19), et qu'à la zone de bord (19.1) se raccorde un canal de refroidissement (29.2) situé du côté de la surface latérale qui s'étend vers le haut et débouche dans un dispositif à canal de sortie (32).

8. Installation de réacteur nucléaire suivant la revendication 7, caractérisée par le fait que le dispositif à canal d'entrée (31) traverse la zone de fond (7.1) de la structure (7) de support et de protection et s'étend depuis une chambre (23), qui loge le réservoir (24) d'eau de refroidissement, jusqu'à la zone centrale (19.0) de la paroi de fond (20) de la cuve réceptrice (19), et que le dispositif à canal de sortie (32) traverse la paroi circonférentielle (7.2) de la structure (7) de support et de protection (7), forme un prolongement du canal de refroidissement (29.2) situé du côté de la surface latérale et débouche dans le réservoir d'eau de refroidissement (24), dans la zone du niveau supérieur (P2) de celui-ci.

9. Installation de réacteur nucléaire suivant l'une des revendications 1 à 8, caractérisée par le fait que le corps de base (19a) de la cuve réceptrice (19) est formé par un creuset, qui est constitué par un alliage d'acier réfractaire, que les surfaces intérieures du fond et de la surface latérale (20,21) du creuset (19a) sont habillées d'une enveloppe de protection (19b), qui sert à protéger le matériau du creuset contre une attaque de la masse en fusion, et qu'à l'enveloppe de protection (19b) succède, en tant que seconde couche de protection pour le creuset, un dépôt de matériau réactif (19c), dont la quantité suffit pour la réaction avec le volume maximum possible de la masse en fusion du coeur, qui pénétrerait dans la cuve réceptrice (19) dans le cas d'un éventuel accident.

10. Installation de réacteur nucléaire suivant la revendication 9, caractérisée par le fait que l'enveloppe de protection (19b) est constituée par l'un des alliages suivants, pris individuellement ou en combinaison : MgO, UO₂ ou ThO₂.

11. Installation de réacteur nucléaire suivant la revendication 9, caractérisée par le fait que le dépôt de matériau réactif (19c) est agencé sous la forme d'un ouvrage de maçonnerie constitué de blocs de béton de blindage (36).

12. Installation de réacteur nucléaire suivant la revendication 1, caractérisée par le fait que les corps (34,34a) produisant des turbulences comprennent ce qu'on appelle des ailes delta (34d) sous la forme de prismes à surfaces triangulaires (F1 à F4), qui sont fixés à la zone de fond (7.1) qui est située à l'opposé de la paroi de fond (20) de la cuve réceptrice ayant une fente de refroidissement, de la structure (7) de support et de protection.

13. Installation de réacteur nucléaire suivant la revendication 1 ou 4, caractérisée par le fait que les corps (34,34a) produisant des turbulences sont agencés sous la forme de tubulures (34r) et que les tubulures (34r) comportent, à leurs extrémités tournées vers la paroi de fond (20) de la cuve réceptrice (19), des évidements en forme de canaux (41) destinés à produire des courants partiels d'eau de refroidissement (f11) de sorte que ces derniers enveloppent la paroi de fond (20) également dans la zone de la tubulure.

14. Installation de réacteur nucléaire suivant la revendication 13, caractérisée par le fait que pour chaque tubulure (34r), il est prévu respectivement deux évidements en forme de canaux (41) en forme de U alignés suivant la direction d'écoulement et dont les frontières sont réalisées sous une forme anguleuse (41.1) pour accroître les turbulences.

15. Installation de réacteur nucléaire suivant l'une des revendications 1 à 14, caractérisée par un anneau de blindage (37), qui est installé au-dessus de la cuve réceptrice (37) et, est relié à ce dernier, dans l'espace annulaire (45) situé entre la paroi périphérique (7.2) de la structure (7) de support et de protection et la périphérie extérieure de la cuve (6) du réacteur sous pression.

16. Installation de réacteur nucléaire suivant la revendication 15, caractérisée par le fait que l'anneau de blindage (37) est ancré dans la paroi périphérique (7.2) de la structure (7) de support et de protection.

17. Installation de réacteur nucléaire suivant la revendication 15 ou 16, caractérisée par le fait que l'anneau de blindage (37) est en béton précontraint et que son armature en acier est réunie à l'armature en acier de la structure (7) de support et de protection, constituée également en béton précontraint, pour former un système unitaire d'armature en acier.

18. Installation de réacteur nucléaire suivant l'une des revendications 15 à 17, caractérisé par le fait qu'il est prévu une isolation thermique (W), qui entoure à distance la partie inférieure (6a) de la cuve (6) du réacteur sous pression et qui est subdivisée essentiellement en trois parties (W1-W3) isolantes qui se prolongent les unes aux autres :
a) une partie inférieure d'isolation (W1), qui habille la couche (19c) de la cuve réceptrice (19) et entoure la calotte de fond (6.1) de la cuve (6) du réacteur sous pression,
b) une partie médiane d'isolation (W2), qui habille la périphérie intérieure de l'anneau de blindage (37), et
c) une partie supérieure d'isolation (W3), qui s'étend depuis l'anneau de blindage (37) jusqu'aux environs de la partie du joint partiel (38) du couvercle de la cuve (6) du réacteur sous pression et est traversée par les tubulures du fluide de refroidissement principal.

19. Installation de réacteur nucléaire suivant l'une des revendications 2 à 18, caractérisée par le fait qu'un système de refroidissement extérieur (29) de la cuve réceptrice (19) est agencé sous la forme d'un système de refroidissement double à air et eau qui, pendant le fonctionnement normal de l'installation de réacteur nucléaire (KA), c'est-à-dire dans le cas où le système de refroidissement extérieur est sec, sert à refroidir par air la cuve (6) du réacteur nucléaire sous pression ou la face extérieure d'une isolation thermique (W) entourant cette cuve et qu'à cet effet le dispositif de canaux d'entrée (31) est relié à une source d'air de refroidissement (49) et le dispositif de canaux de sortie (32) est relié à un dispositif d'absorption de l'air de refroidissement.

20. Installation de réacteur nucléaire suivant la revendication 19, caractérisée par le fait qu'il est prévu, en plus du système de refroidissement extérieur double (29,ZL1), un autre système de refroidissement à air (ZL2) pour la cuve (6) du réacteur sous pression, que, pour l'aération de cet autre système de refroidissement à air (ZL2), des canaux d'entrée (50), qui traversent la paroi circonférentielle (7.2) de la structure (7) de support et de protection et l'anneau de blindage (37), débouchent dans une chambre (45) supérieure d'air de refroidissement, et que cette chambre (45) supérieure d'air de refroidissement s'étend à l'extérieur de la partie supérieure d'isolation (W3) jusqu'à une structure annulaire de support (51) de la cuve (6) du réacteur sous pression, l'air de refroidissement ascendant pouvant passer en plusieurs écoulements partiels, le long des surfaces de refroidissement suivantes :
- sur la périphérie extérieure de la partie supérieure d'isolation (W3) et sur la périphérie intérieure de la paroi périphérique (7.2) de la structure (7) de support et de protection,
- sur les surfaces extérieures de la structure annulaire de support (51), notamment sur ses bras de support (51a), qui supportent les consoles de support (54) de la cuve (6) du réacteur sous pression, et sur son appui particulier (55), et
- dans des canaux annulaires de sortie (7.4), qui sont formés entre la périphérie extérieure des canalisations du fluide de refroidissement principal (HL) et la périphérie intérieure de traversées (7.3) de la paroi de la structure (7) de support de protection, et qui pénètrent dans l'enceinte de confinement ou dans l'installation de filtration d'air effluent.

21. Installation de réacteur nucléaire suivant l'une des revendications 1 à 20, caractérisée par le fait que la cuve réceptrice (19) est traversée, dans la moitié supérieure de sa paroi de la surface laterale (21), par au moins un tube (56) de refroidissement de la masse en fusion, qui, dans le cas d'une structure à couches multiples de la cuve réceptrice (19), traverse la paroi (19a) du creuset, la couche de protection (19b), le dépôt en matériau réactif (19c) et l'isolation thermique (W1), de ce réservoir, est fermé de façon étanche, à son extrémité intérieure, au moyen d'un bouchon (56a) de retenue de la masse en fusion et est disposé en déclivité de l'extérieur vers l'intérieur et est relié, du côté entrée, à un accumulateur (24) de fluide de refroidissement, de sorte que, dans le cas où la masse en fusion du noyau est présente dans la cuve réceptrice (19), le bouchon (56a) retenant la masse en fusion est chauffé à sa température de fusion et est amené en fusion et par conséquent un trajet d'écoulement est libéré pour le fluide de refroidissement en direction de la surface supérieure de la masse en fusion du coeur.

22. Procédé pour la mise en oeuvre et le maintien d'un refroidissement extérieur du dispositif de retenue du coeur, dans une installation de réacteur nucléaire suivant l'une des revendications 2 à 21, caractérisé par le fait
- que lors du fonctionnement normal de l'installation de réacteur nucléaire, le niveau du fluide de refroidissement du réservoir d'eau de refroidissement (24) est maintenue bas, de sorte que de l'eau de refroidissement ne peut parvenir dans le dispositif à canal d'entrée (31) du système de refroidissement (29) de la cuve réceptrice,
- que lors de l'apparition d'une fuite dans le circuit primaire, de l'eau de refroidissement de secours est introduite dans les canalisations du fluide de refroidissement principal (HL) de la cuve (6) du réacteur sous pression, par des accumulateurs de pression pouvant être activés en fonction de la pression dans le circuit primaire, cette eau de refroidissement de secours étant introduite par l'intermédiaire du point de fuite et éventuellement, parallèlement, par l'intermédiaire d'autres emplacements d'alimentation, dans le réservoir d'eau de refroidissement (24), tandis que le volume d'eau des accumulateurs de pression suffit pour élever le niveau d'eau de refroidissement du réservoir d'eau de refroidissement (24) jusqu'à un niveau d'eau élevé (P2), pour lequel de l'eau de refroidissement peut parvenir dans le dispositif à canal d'entrée (31) et, à partir de là, dans la zone intermédiaire (28) du système de refroidissement (29) de la cuve réceptrice, et peut remplir le système de refroidissement jusqu'au niveau d'un dispositif à canal de sortie (32), de sorte que dans le cas où la cuve réceptrice (19) est chaude, un écoulement à circulation naturelle s'effectue du réservoir d'eau de refroidissement (24) en passant par le dispositif à canal d'entrée (31) en direction des canaux de refroidissement (29.1,29.2) situés du côté du fond et de l'enveloppe, du système de refroidissement (29) et, à partir de là, retourne par l'intermédiaire du dispositif à canal de sortie (32) vers le réservoir d'eau de refroidissement (24).
